# EUROPEAN PATENT SPECIFICATION

(11) **EP 4 191 411 B1**
(45) Date of publication and mention of the grant of the patent: **11.06.2025**
(21) Application number: 22211341.7
(22) Date of filing: 05.12.2022
(51) Int. Cl.: G06F 9/50, G06N 3/08

(54) **DISTRIBUTED TRAINING METHOD BASED ON END-TO-END ADAPTION, AND DEVICE**
VERTEILTES TRAININGSVERFAHREN AUF BASIS EINER END-ZU-END-ANPASSUNG UND VORRICHTUNG
PROCÉDÉ D'APPRENTISSAGE DISTRIBUÉ BASÉ SUR UNE ADAPTATION DE BOUT EN BOUT, ET DISPOSITIF

(30) Priority: 06.12.2021 CN 202111471601
(43) Date of publication of application: 07.06.2023
(73) Proprietor: Beijing Baidu Netcom Science Technology Co., Ltd., Beijing 100085 (CN)
(72) Inventor: WANG, Haifeng, Beijing, 100085 (CN); WU, Zhihua, Beijing, 100085 (CN); YU, Dianhai, Beijing, 100085 (CN); MA, Yanjun, Beijing, 100085 (CN); WU, Tian, Beijing, 100085 (CN)
(74) Representative: advotec.

(56) References cited:
- EP-A1- 3 734 475
- US-A1- 2021 216 875

## Description

### TECHNICAL FIELD

The present disclosure relates to a field of artificial intelligence (AI) technologies, especially to fields of deep learning and cloud computing, and particularly to a distributed training method and an apparatus based on end-to-end adaption, a device and a storage medium.

### BACKGROUND

In recent years, in order to obtain a better result, models in the fields of computer vision, natural language processing, personalized recommendation and other fields have adopted a larger-scale of model parameters or a larger-scale of training data. From a perspective of a user of a training framework, a current conventional distributed training technology is still facing serious problems in usability, robustness and resource utilization rate. For example, common problems include low automation, a high single point failure rate, etc.

EP 3 734 475 A1 discloses a method and a device for training data, a storage medium, and an electronic device. The method includes determining sample data and an available cluster resource; splitting an overall training model into sub-models; and training the sample data concurrently on the sub-models by using the cluster resource.

### SUMMARY

The present application relates to a distributed training method for a model based on an end-to-end and adaptive way according to independent claim 1, a distributed training apparatus for a model based on an end-to-end adaptive way according to independent claim 13, a non-transitory computer-readable storage medium according to independent claim 14 and a computer program product according to independent claim 15.

Further aspects of the present application are defined by the dependent claims.

It should be understood that, the content described in the part is not intended to identify key or important features of embodiments of the present disclosure, nor intended to limit the scope of the present disclosure. Other features of the present disclosure will be easy to understand through the following specification.

### BRIEF DESCRIPTION OF THE DRAWINGS

The drawings are intended to better understand the solution, and do not constitute a limitation to the disclosure.
FIG. 1 is a flowchart illustrating a distributed training method based on end-to-end adaption according to the present disclosure;
FIG. 2 is a flowchart illustrating a process of slicing a model to be trained according to the present disclosure;
FIG. 3 is an overall schematic diagram illustrating a distributed training method of a model according to the present disclosure;
FIG. 4 is a flowchart one illustrating a process of determining an attribute of computing resources according to the present disclosure;
FIG. 5 is a flowchart of a manner for determining a category of distributed attribute information according to the present disclosure;
FIG. 6 is a flowchart illustrating a process of determining a hardware topology relation of the computing resources according to the present disclosure;
FIG. 7 is a schematic diagram illustrating a hardware topology relation of the computing resources according to the present disclosure;
FIG. 8 is a flowchart illustrating a process of determining an attribute of computing resources according to the present disclosure;
FIG. 9 is a flowchart illustrating a process of determining a distribution strategy according to the present disclosure;
FIG. 10 is a flowchart illustrating distributed training according to the present disclosure;
FIG. 11 is a flowchart illustrating distributed training according to the present disclosure;
FIG. 12 is a flowchart illustrating distributed training according to the present disclosure;
FIG. 13 is a schematic diagram illustrating a remedial measure according to the present disclosure;
FIG. 14 is a flowchart illustrating distributed training according to the present disclosure;
FIG. 15 is a schematic diagram illustrating a remedial measure according to the present disclosure;
FIG. 16 is a flowchart illustrating distributed training according to the present disclosure;
FIG. 17 is a schematic diagram illustrating an adjustment after expansion of computing resources according to the present disclosure;
FIG. 18 is a flowchart illustrating a distributed training method based on end-to-end adaption according to the present disclosure;
FIG. 19 is a diagram illustrating a distributed training apparatus based on end-to-end adaption according to the present disclosure;
FIG. 20 is a block diagram illustrating an electronic device configured to implement a distribution training method based on end-to-end adaption in the embodiment of the present disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope and spirit of the present disclosure. Similarly, for clarity and conciseness, descriptions of well-known functions and structures are omitted in the following descriptions.

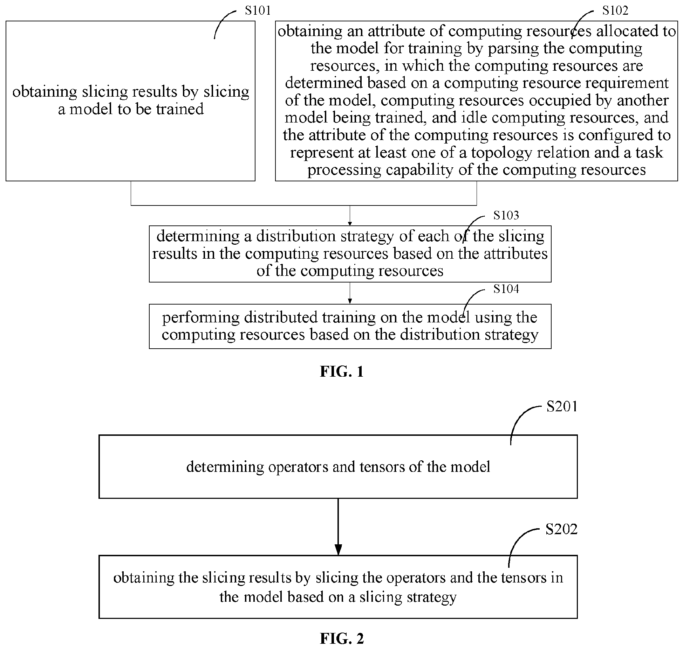

As illustrated in FIG. 1, the present disclosure relates to a distributed training method based on end-to-end adaption, and the method may include the followings.

At block S101, slicing results are obtained by slicing a model to be trained.

At block S102, an attribute of computing resources allocated to the model for training is obtained by parsing the computing resources. The computing resources are determined based on a computing resource requirement of the model to be trained, computing resources occupied by another model being trained, and idle computing resources, and the attribute of the computing resources is configured to represent at least one of a topology relation and a task processing capability of the computing resources.

At block S103, a distribution strategy of each of slicing results in the computing resources is determined based on the attribute of the computing resources.

At block S104, distributed training is performed on the model to be trained using the computing resources based on the distribution strategy.

The execution body of the method in the present disclosure may be a cloud server or a model training platform for performing model training, for example, may be a heterogeneous training platform based on k8s.

An executor that executes the above method may be loaded in the execution body. Taking a model training platform for an example, the function of the model training platform is to receive a model training request initiated by a client and allocate computing resources for the client. The executor acquires a model training request and computing resource information through interaction with the platform, thereby executing a model training process.

The model to be trained may include a visual model, a language model, a recommendation model, a click rate prediction model and so on. The parameter magnitude and the magnitude of training samples of the model to be trained are in units of billions.

A distributed training process for a model may be an end-to-end process. For example, the model to be trained may be acquired by parsing by the model training platform the model training request initiated by the client. By parsing the model training request, a training process of the model may be performed based on an analysis result, until the result output by a final model converges.

In the related art, it is necessary to develop slicing strategies for different models separately in a model training process. Further, for training parallel strategies, it is required to perform compatibility and combination based on a framework of an existing model training platform. With increase of parallel strategies, the development difficulty will gradually increase. Considering different computations, storages, bandwidth resources and connection relations under different hardware architectures on a hardware side, a framework developer of the model training platform further needs to develop a parallel strategy in combination with features of the hardware in a customization manner. For example, in the related art, developers are required to manually conduct adaptive development based on the model to be trained and the hardware of the model training platform, resulting in a poor usability. Since features of different models to be trained may vary greatly, corresponding training strategy solutions may vary, for example, the natural language processing model, the computer vision model and other models require a combined application of multi-dimensional hybrid parallel strategies to solve model storage and efficient communication problems. However, a model parallelism of models in a recommended scene is required to solve sparse storage and data parallelism is used to improve a throughput efficiency, which may result in a higher barrier to entry for developers.

Second, the robustness in the related art is poor. A large number of computing resources are prone to a single-node failure, which further leads to failure of the entire training. When the process of model training task submission, computing resource allocation, model to be trained loading and training starting is re-experienced, it often takes tens of minutes, which not only delays a training progress, but also causes a large number of idle computing resources. Taking a thousand-card cluster for an example, half an hour of idle time results in an extra training cost of tens of thousands yuan.

Again, in the related art, only one computing resource may be used for one training task. However, with development and upgrading of the hardware, types and models of computing resources may be more and more, and a large number of idle computing resources may be produced. In the related art, it is not fully considered to match appropriate parallel strategies based on features of computing resources, resulting in not giving full play to the advantages of each hardware.

In this regard, in the above process of the present disclosure, an automated model slicing process may be configured, to slice a model to be trained. For example, the model to be trained may be sliced based on a network layer of the model to be trained. For example, tensors at the same network layer may be sliced, and N tensors at the same network layer may be divided into two groups, with N/2 tensors in each group. Alternatively, the slicing is performed per network layer, tensors belonging to the same network layer may be sliced into one slice, or tensors belonging to a plurality of network layers with the same function may be sliced into one slice. By slicing the model to be trained, distributed operators and distributed tensors may be decoupled, so that various parallel strategies may be flexibly represented and combined, which greatly improves expansibility and maintainability of a distributed training architecture.

In addition, a hardware parsing mechanism may be used to parse computing resources allocated to the model to be trained to obtain an attribute of the computing resources. The attribute of the computing resources is configured to represent at least one of a topology relation and a task processing capability of the computing resources. For example, the topology relation of the computing resources may be information such as connection relation between a current computing resource and other computing resources, bandwidth. The task processing capability may include a task processing speed and the number of tasks processed of the current computing resource.

On one hand, allocation of the computing resources may be based on parsing of a model training request initiated by a client. For example, the number of computing resources requested in the training request is a value between a to b, in which, a and b are positive integers, and the value between a to b may be assigned based on an idleness situation of the computing resources. The value is configured as the number of computing resources in response to the training request.

On the other hand, the computing resources allocated to the model to be trained for training further are determined based on a computing resource requirement of the model to be trained, computing resources occupied by another model being trained and idle computing resources. When the training request of the model to be trained submitted by the client is received, a minimum computing power and a maximum computing power of the required computing resources are parsed. Based on the parsed computing power requirement, as few computing resources as possible are found out and allocated to the model to be trained.

Specifically, the allocation manner may be based on the following situations.

If the current idle hardware resources cannot meet a current user demand, and the current user does not have a training task occupying more hardware resources than required, training tasks of the current user need to be queued.

If the current idle hardware resources cannot meet the current user demand, however, the current user has a training task occupying more hardware resources than required, and the current user's computing power demand for the training task still can be met after excess hardware resources are removed, then allocation shrinkage of hardware resources may be triggered.

If the current idle hardware resources can meet the current user demand, but the idle hardware resources (for example, cards) are scattered on a plurality of machines, in this case, defragmentation may be started, to trigger a fault-tolerant function of a task being trained, and move the task being trained from one machine to another for continuing training, so that the current user may acquire the whole machine for task training.

If the current idle hardware resources can meet the current user demand and exceed the current user demand, and no other task is queued, more hardware resources are allocated to the current user under the premise of meeting the maximum computing power demand of the current user.

The granularities of computing resources may include, such as a minimum component, a machine component including minimum components, and a clust including machine components. For example, the clust may correspond to a cluster, the machine component may correspond to a single machine, the minimum component may correspond to a card in a single machine, and so on. By parsing the computing resources allocated to the model to be trained, a specific connection relation between clusters, between single machines within a cluster, and between minimum components within a single machine may be achieved. Through the connection relation, a communication situation between different computing resources may be determined, so that a shielding between computing resources with differences, low communication efficiency or incompatibility may be realized.

In a current implementation, slicing of the model to be trained and determination of the attribute of the computing resources (including allocation of the computing resources) may be performed in parallel. In this way, an efficiency of model training may be improved. For example, by taking receipt of a model training request of a user as a trigger condition, on one hand, the model training request may be parsed to acquire the model to be trained, thereby achieving slicing of the model. On the other hand, available resources on the training platform may be analyzed as a whole based on the trigger condition, to determine a computing resource allocation result in response to the model training request based on the computing resource requirement of the model to be trained, the computing resources occupied by other models being trained and the idle computing resources.

A distribution strategy of each of slicing results in the computing resources may be determined based on the attribute of the computing resources. For example, the slicing results include N slices. The distribution strategy may be determined based on an optimal allocation result of allocating the N slices to the corresponding number of computing resources. The optimal allocation result may have a fastest training speed, a largest amount of training data, and a highest utilization of each computing resource. Specific settings may be made based on the user's training demand.

Distributed training is performed on the model to be trained using the computing resources based on the distribution strategy. Distributed training may include making the model to be trained perform a computing process in parallel, to improve a training efficiency.

The above process in the disclosure may be applied to super-large model training scenes in fields of computer vision, natural language processing, recommended search advertising.

Taking a field of computer vision for an example, the above process may support training of a classification model with tens of millions or hundreds of millions of faces, a visual model with billions of samples, a multi-modal model with billions of images and texts and so on, and may be further applied to downstream tasks, such as face detection, vehicle detection, graphic search, image generation, etc.

Taking natural language processing for an example, the above process may support training of a dialogue model with tens of billions of dialogues, a language model with tens of billions, hundreds of billions, trillions of samples, and further may be applied to a dialogue system, search semantic relevance, intelligent writing and other scenes.

Taking a recommended field for an example, the above process may support training of a click model with trillion clicks, and further may be applied to information flow scenes such as video recommendation and image-text recommendation, search sorting, and advertisement sorting.

In general, the process in the disclosure generalizes any slicing strategy supporting any model through a unified computing view. Any hardware in any cluster is supported through a unified resource view, to generalize differences brought by masking heterogeneous hardware resources. When a model and a resource change, the whole system may automatically regenerate a unified computing view and a unified resource view, and automatically trigger subsequent sub-modules without interrupting a task to perform re-slicing, resources mapping again, allocate new distributed tasks to each device, and start a process to perform task allocation and execution.

Through the above process, for the model to be trained uploaded by the client, the computing resources are automatically analyzed. No other operation is required at the client, so that for the client, the model training process may be simplified.

As illustrated in FIG. 2, in one implementation, block S 101 may include the followings.

At block S201, operators and tensors in the model to be trained are determined.

At block S202, the slicing results are obtained by slicing the operators and the tensors in the model to be trained using the slicing strategy.

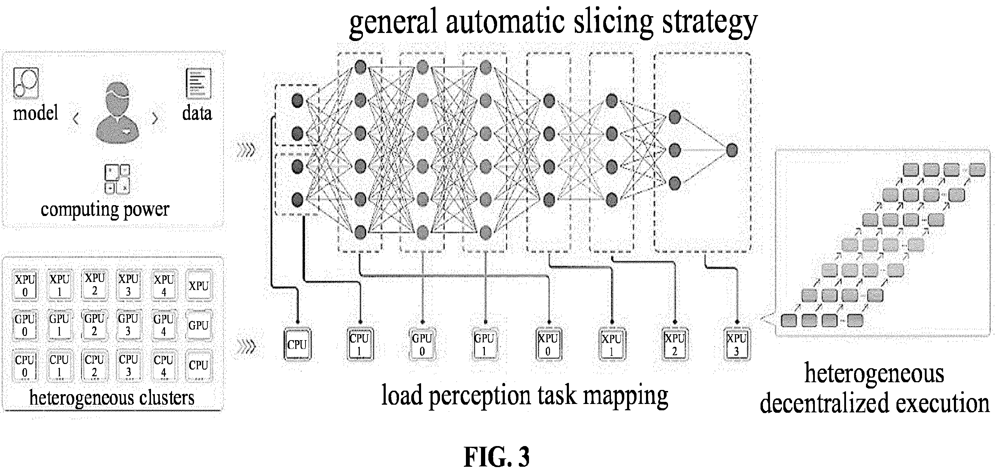

Corresponding to "a general automated slicing strategy" illustrated in FIG. 3, the model to be trained in FIG. 3 includes eight network layers. The first network layer (leftmost in FIG. 3) of the model to be trained may be configured as an input layer of the model to be trained, and the last network layer (rightmost in FIG. 3) may be configured as an output layer of the model to be trained. The middle six network layers may serve as hidden layers of the model to be trained. Taking the first network layer for an example, the network layer includes four tensors. The connection lines connecting tensors of network layers in FIG. 3 may be taken as operators.

By parsing the model to be trained, the operators and the tensors in the model to be trained may be determined. The slicing strategy may be included in the model training request initiated by the client. In case that the model training request initiated by the client does not include a slicing strategy, the slicing strategy may be determined using a pre-trained slicing strategy model.

Based on the determined slicing strategy, the operators and the tensors in the model to be trained may be sliced to obtain the slicing results. Since the slicing results may be performed in a distributed manner, the slicing results are referred to as distributed operators and distributed tensors.

Through the above process, the distributed operators and the distributed tensors may be decoupled, so that various parallel strategies may be flexibly represented and combined, which greatly improves expansibility and maintainability of a distributed training architecture.

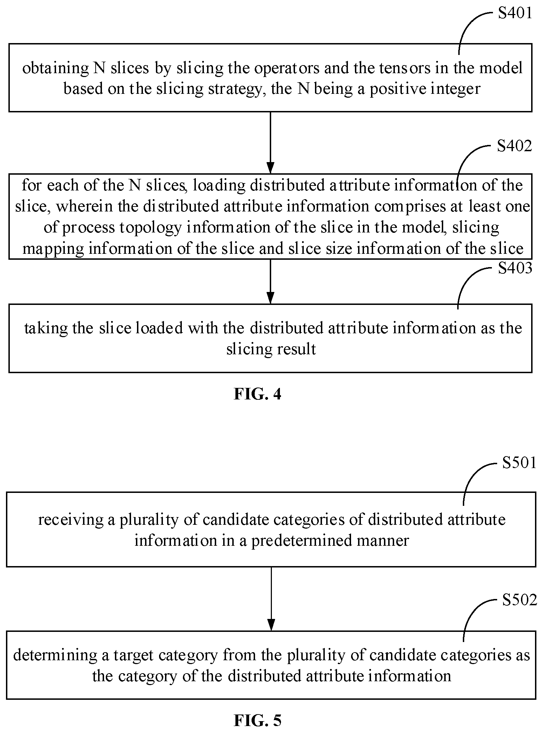

As illustrated in FIG. 4, in one implementation, block S202 may include the followings.

At block S401, N slices are obtained by slicing the operators and the tensors in the model to be trained using the slicing strategy, the N being a positive integer.

At block S402, for each slice, distributed attribute information of the slice is loaded, the distributed attribute information includes at least one of process topology information of the slice in the model to be trained, slicing mapping information of the slice and slice size information of the slice.

At block S403, the slice loaded with the distributed attribute information is taken as the slicing result.

The N slices may be correspondingly obtained by slicing the operators and the tensors in the model to be trained using the slicing strategy. Taking slicing as illustrated in FIG. 3 for an example, eight dashed boxes in FIG. 3 correspond to eight slices, respectively. Four tensors in the first network layer are divided into two slices on average, each slice including two tensors. Each of the corresponding network layers between the first hidden layer to the fifth hidden layer is sliced into one slice. The sixth hidden layer and the output layer of the model to be trained each may be sliced into one slice.

The distributed attribute information of the slice may represent a slicing dimension of the slice. Taking four tensors in the first network layer being divided into two slices on average for an example, the distributed attribute information of two slices is the same, the process topology information (process_mesh) of the slice in the model to be trained may represent that the slice is the input layer of the model to be trained, in which an input end of the slice is a training sample, and an output end of the slice is the first hidden layer. Slicing mapping information (dims_mapping) of the slice may be configured to represent the number of slices that a single network layer is sliced, for example, the first network layer is sliced into two slices. For example, if four tensors in the first network layer are sliced into four slices, the slicing mapping information of the slice may be configured to represent that a single network layer is divided into four slices. Slice size information (shard_sizes) of the slice may be configured to represent the number of network layers contained in the slice. For example, in addition to that the slice size information on the rightmost side in FIG. 3 is 2, the size information of the remaining slices may be 1. In addition, the slice size information of the slice may be further configured to represent the number of operators and the number of tensors contained in each slice.

Through the above process, each slice may carry a corresponding distributed attribute, and a distributed attribute of a tensor in a slice is supported to be different from the corresponding distributed attribute in an operator using the tensor, which is beneficial to separation of a storage process and a calculation process.

As illustrated in FIG. 5, in one implementation, the manner for determining a category of the distributed attribute information may include the followings.

At block S501, a plurality of candidate categories of the distributed attribute information are received in a predetermined manner.

At block S502, a target category from a plurality of candidate categories is determined as the category of the distributed attribute information.

The predetermined manner may be a manner for receiving a category by setting a receiving port of a distributed attribute category. An uploaded object of the category of the distributed attribute information may be a qualified user or an accredited third party. The category of the received distributed attribute may be discriminated in a manner such as manual recognition or machine recognition, and a qualified category may be discriminated as a candidate category.

Alternatively, the predetermined manner may refer to that a developer writes a category of the distributed attribute information. The specific predetermined manner is not exhaustive here.

The manner for determining the target category from the plurality of candidate categories may be determined based on a training requirement of a model, or may be determined based on a usage rate of the target category. The usage rate may be acquired based on historical data.

In this way, a category extension mechanism of the distributed attribute information may be developed, to support a plurality of divisions of the distributed attribute information, including coarse granularity and fine granularity.

In one implementation, it may further include: determining placement information of each of the slices using the distributed attribute of each of the slices, the placement information is configured to represent a physical mapping relation between the slices and the computing resources.

The placement information (device_placement) of the slice may represent the computing resource required by the slice. For example, four tensors in the first network layer in FIG. 3 are divided into two slices on average, the placement information of two slices may be the same, therefore, completion time of the two slices may be ensured to be basically the same. Therefore, the computing resources corresponding to the two slices may be characterized by an equivalent computing power or a short communication link, so that a training efficiency may be improved.

In addition, when it is determined that the number of operators or the number of tensors in the slice are large based on the distributed attribute, the computing resource with a stronger computing power may be selected as a placement object.

Through the above process, decoupling between logical slicing and physical mapping of a training model may be achieved, which may be better compatible with heterogeneous hardware using the placement information of the slice, so that the efficiency of the training process is more optimized.

In one implementation, when slices are located at adjacent network layers of the model to be trained and have different placement information, the method may include: determining a communication auxiliary operator using the placement information, the communication auxiliary operator is configured to represent an upstream and downstream logical operation relation between the slices.

Taking FIG. 3 for an example again, the relation between the slice corresponding to the first hidden layer in FIG. 3 and the slice corresponding to the second hidden layer may indicate that the slices are allocated at adjacent network layers of the model to be trained. For the adjacent network layers, output data of an upstream network layer may be taken as input data of a downstream network layer. The computing resource corresponding to the first hidden layer is XPU0 in FIG. 3, and the computing resource corresponding to the second hidden layer is GPU0 in FIG. 3.

Obviously, the two slices are located at adjacent network layers of the model to be trained and placement information of the two slices is different. In this case, a communication auxiliary operator may be determined, to inform two slices and corresponding computing resources, and for example, informed information may indicate to transmit a computing result to GPU0 using the communication auxiliary operator when XPU0 in FIG. 3 completes corresponding computation and obtains the computing result, to achieve continuity of computing and ensure correctness of cross-device slicing.

In one implementation, when the slice is located at the same network layer of the model to be trained, the method may include: determining a recombination transformation operator, the recombination transformation operator is configured to represent a network layer consistency relation between the slices.

Taking FIG. 3 for an example again, four sensors in the first network layer in FIG. 3 are sliced into two slices on average. In an example as illustrated in FIG. 3, the computing resource corresponding to a first slice in the two slices is CPU0 in FIG. 3, and the computing resource corresponding to a second slice in the two slices is CPU1 in FIG. 3. In this case, a recombination transformation operator may be determined, to inform two slices and corresponding computing resources. For example, the informed information may indicate to merge computing results when CPU0 and CPU1 in FIG. 3 complete corresponding computation and obtain the computing results, to correspond to output data of the first network layer.

It is not difficult to understand that even if the computing resources corresponding to two slices shown in FIG. 3 are the same, the computation results still may be merged using the recombination transformation operator.

Through the above process, correctness of computation may be ensured.

In one implementation, the manner for determining a slicing strategy includes: determining the slicing strategy by parsing a model training request initiated by a client.

In one implementation, the manner for determining a slicing strategy includes: determining the slicing strategy using a pre-trained slicing strategy model.

The model to be trained may be represented as a logical computing view based on a model training request initiated by a client, and attribute tagging is performed on the logical computing view. An attribute tag may correspond to the foregoing distributed attribute information. Further, a resource view is constructed based on the computing resources allocated by a training platform. The logical computing view and the resource view just likes the example illustrated in FIG. 3.

A slicing strategy model may determine the slicing strategy based on the following situations.

For example, there are N slicing manners for the logical computing view and M slicing manners for the hardware resource view. Cost values of N * M are calculated through a costing model, the slicing strategy with the minimum cost value is selected as a final slicing strategy.

For another example, the N slicing manners for the logical computing view are screened, and a screening rule may be that a slicing speed is the fastest, and the number of slicing results is within a corresponding threshold range. The screened results may be denoted as N₁. Cost values of N₁*M are calculated through the costing model, and the slicing strategy with the minimum cost value is selected as a final segmentation strategy.

For another example, the logical computing view and the hardware resource view are abstracted into corresponding mathematical expressions. A final slicing strategy is obtained by solving the mathematical expressions.

A pre-trained slicing strategy model may be a cost-model. The cost-model may include a search algorithm and a costing model. Different results may be obtained using the search algorithm, and different results are evaluated using the costing model. The principle that the above model follows is that the slicing strategy satisfies benefit maximization. For example, benefit maximization may include that the slicing results obtained using the slicing strategy satisfy that a computing time is shortest, and the slicing results obtained using the slicing strategy satisfies that training accuracy is higher than a predetermined threshold. The slicing strategy model may perform a slicing operation on the model to be trained based on the number of computing resources and the structure of the model to be trained. A specific slicing strategy may achieve corresponding effects varying with different training samples. The training process of the cost-model is not elaborated.

Block S102 includes: determining a hardware topology relation of the computing resources, and the hardware topology relation is taken as the attribute of the computing resources.

The manner for determining the hardware topology relation of the computing resources may be acquired by parsing the computing resources allocated to the model to be trained.

The hardware topology relation of the computing resources may include a connection relation of the computing resources, bandwidth information, a task processing capability, etc. For example, when the current computing resource is taken as a source computing resource, the connection relation of the computing resources may include a connection relation between the source computing resource and a target computing resource.

For example, the computing resources may include software resources, hardware resources, etc. Specifically, the computing resources may include CPU, GPU, XPU, Memory, etc.

By confirming the attribute of the computing resources, a computing resource (cluster) processing capability and a topology connection relation may be abstracted, so that differences between hardware may be masked, various heterogeneous hardware and cluster environments may be supported, which further reduces development difficulty.

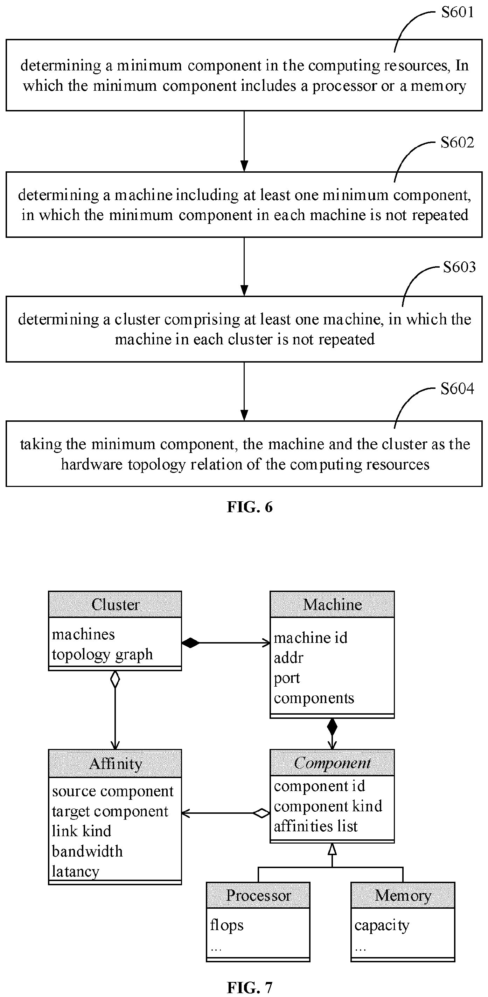

As illustrated in FIG. 6, in one implementation, determining the hardware topological relation of the computing resources may include the followings.

At block S601, a minimum component in the computing resources is determined, the minimum component includes a processor or a memory.

At block S602, a machine including at least one minimum component is determined, the minimum component in each machine is not repeated.

At block S603, a cluster including at least one machine is determined, the machine in each cluster is not repeated.

At block S604, the minimum component, the machine and the cluster are taken as the hardware topology relation of the computing resources.

FIG. 7 is a schematic diagram of a hardware topology relation of computing resources. The cluster (Cluster in FIG. 7) shown in FIG. 7 includes a plurality of machines (Machine in FIG. 7), each machine including a plurality of minimum components (Component in FIG. 7). Component is a minimum unit constituting a machine, which may be a processor (Processor in FIG. 7) or a memory (Memory in FIG. 7). A computing power of a processor is expressed as the number of floating-point operations performed per second (flops in FIG. 7). A storage capacity of a memory is denoted as capacity in FIG. 7.

Each component records its association information, such as an identification of Component (Component id in FIG. 7), a type of Component (Component kind in FIG. 7). Component kind corresponds to a processor or a memory.

Each Machine records its Components (components in FIG.7). In addition, an identification of the Machine (machine id in FIG.7), a physical address of the Machine (addr in FIG.7), and a port contained in the Machine (port in FIG.7) may be further recorded.

Cluster records its Machine (machines in FIG.7) and a topology graph (Topology Graph in FIG.7). Each vertex in Topology Graph corresponds to a component, and further corresponds to an affinity list (Affinity in FIG. 7).

Correspondingly, in one implementation, determining the hardware topology relation of the computing resources further includes: determining an affinity list of each minimum component; the affinity list includes at least one of a connection relation between a source minimum component and a target minimum component, bandwidth information and latency information; and taking the affinity list as the hardware topology relation of the computing resources.

The source minimum component in FIG. 7 may be expressed as source component, and the target minimum component may be expressed as target component. The connection relation between the source minimum component and the target minimum component may be expressed as link kind, the bandwidth information may be expressed as bandwidth, and the latency information may be expressed as latency. The connection relation may include PCIE, IB, Shared Memory, NVLINK, etc.

Through the above process, not only topology information between the devices is included, but also processing capability related information of a processor, a video memory and a bandwidth in the device is included, so that shielding of a specific connection manner and differences between clusters, between internal hardware of a cluster, and inside a hardware is achieved, and various heterogeneous hardware and cluster environments may be supported.

In one implementation, the computing resources allocated to the model to be trained for training is determined based on at least one of a content of a model training request initiated by a client, and the number of clients that initiate the model training request.

A client initiates the model training request on a model training platform. The types of the training request include an elastic training task and a non-elastic training task. The embodiments of the present disclosure aim at mainly the elastic training tasks, and the elastic training tasks are classified into a fault-tolerant mode and an elastic expansion and shrinkage mode. When the number of required computing resources (computing nodes) is specified as a fixed value (for example, node_nums = 2 or node_nums = 2:2), it indicates the fault-tolerant mode. When the number of required computing resources is specified to be a range (for example, node_nums = 2: 4), it indicates the elastic expansion and shrinkage mode.

Allocation of computing resources, on one hand, may be determined based on a content of the model training request initiated by the client. On the other hand, it further may be determined based on the number of clients initiating the model training request. For example, when the number of the clients initiating the model training request is large, the demand for computing resources may be increased, and thus a queuing situation may occur in the computing resources. On the contrary, when the number of the clients initiating the model training request is small, the demand for computing resources may be reduced, and thus there may be idle computing resources.

Based on the foregoing two situations, overall regulation may be performed on the computing resources of the training platform, and advantages of each computing resource are brought into full use while the computing resource is fully utilized, which further improves a cluster resource utilization. In addition, there may be a large number of idle resources at night. Time multiplexing of the computing resources may be achieved using the foregoing manner, which brings a greater benefit to the client and the training platform.

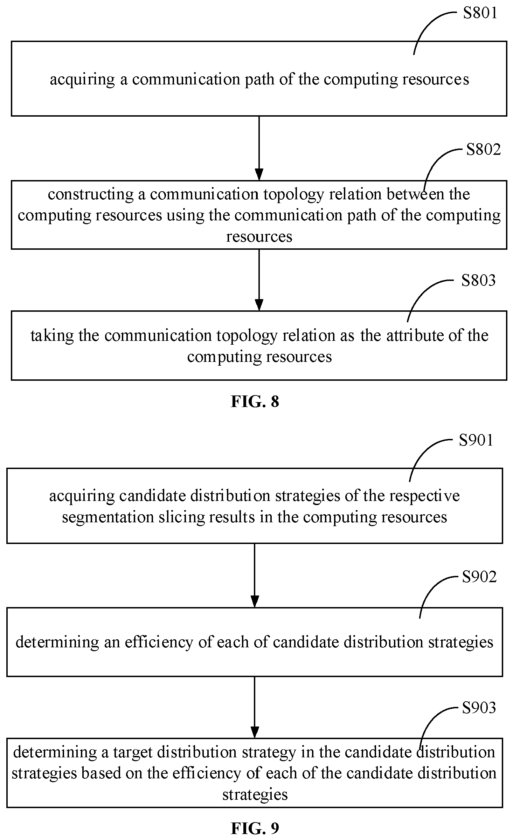

As illustrated in FIG. 8, in one implementation, obtaining the attribute of the computing resources by parsing the computing resources allocated to the model to be trained for training may include the followings.

At block S801, a communication path of the computing resources is acquired.

At block S802, a communication topology relation between the computing resources is constructed using the communication path of the computing resources.

At block S803, the communication topology relation is taken as the attribute of the computing resources.

The communication path of the computing resources may be configured to represent a communication connection state, a communication connection mode and a communication speed of a source communication resource and a target communication resource.

The communication connection state may include a connected state and an unconnected state. When the communication connection state is the connected state, the communication connection mode may correspond to a specific communication mode of the source communication resource and the target communication resource. The communication speeds may be correspondingly measured and calculated based on different communication modes.

The communication topology relation between the computing resources may be constructed using the communication path of the computing resources. For example, the topology relation may include a plurality of communication sub-domains. Different parallel modes may be performed through different communication sub-domains. A plurality of parallel modes may exist at the same time.

In one implementation, the method further may include: determining a shortest communication path between a source computing resource and a target computing resource based on the communication topology relation.

Communication durations between different computing resources may be calculated based on the communication topology relation. Based on comparison of the communication durations, a shortest communication path between the source computing resource and the target computing resource may be determined based on the communication topology relation when the source computing resource is required to communicate with the target computing resource.

As illustrated in FIG. 9, in one implementation, block S 103 may include the followings.

At block S901, candidate distribution strategies of respective slicing results in the computing resources are acquired.

At block S902, an efficiency of each of candidate distribution strategies is determined.

At block S903, a target distribution strategy in the candidate distribution strategies is determined based on the efficiency of each candidate distribution strategy.

Taking the slicing results including N slices for an example, time estimation, efficiency estimation, etc. after allocation of the computing resources may be performed by traversing the N slices and computing resources in turn in an exhaustive manner. That is, exhaustive results may correspond to candidate distribution strategies. A time estimation result, an efficiency estimation result, etc. may be taken as a cost of each candidate distribution strategy. The cost is configured to represent a training efficiency of each slicing result, or an overall training efficiency of the model to be trained.

For example, the distribution strategy corresponding to the highest overall training efficiency of the model to be trained is determined as a final distribution strategy. Or, each candidate distribution strategy also may be traversed to determine the number of slicing results each with a training efficiency reaching the highest or a threshold, and the candidate distribution strategy with the largest number may be determined as a final distribution strategy. The distribution strategy with the largest number of slicing results each with highest efficiency is determined as a final distribution strategy.

Based on the above process, an optimal distribution strategy may be determined.

In one implementation, block S903 may specifically: sorting the candidate distribution strategies using a predetermined rule; and determining the target distribution strategy in the candidate distribution strategies based on a sorting result.

A pre-trained distribution strategy determining model may be a cost-model. The principle that the cost-model follows is that the distribution strategy satisfies benefit maximization. For example, benefit maximization may correspond to different predetermined rules, for example, may include the overall training efficiency of the training model is the highest, the training efficiency of a single slicing result is highest or the number of slicing results each with the training efficiency reaching a threshold is largest, etc. Specifically, corresponding effects may be achieved based on different training samples. After the predetermined rule is selected, the candidate distribution strategies may be sorted based on the predetermined rule, and finally the target distribution strategy is determined from the candidate distribution strategies based on the sorting result. In a current implementation, the training process of the cost-model is not elaborated.

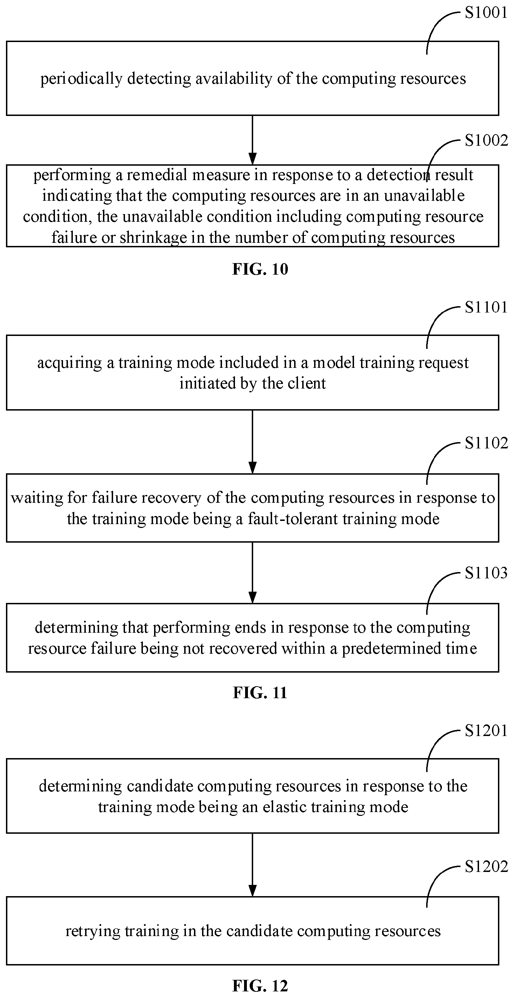

As illustrated in FIG. 10, in one implementation, block S104 may include the followings.

At block S1001, availability of the computing resources is periodically detected.

At block S1002, a remedial measure is performed in response to a detection result indicating that the computing resources are in an unavailable condition, the unavailable condition including computing resource failure or shrinkage in the number of computing resources.

Availability of the computing resources may be detected periodically and passively detected by means of acquiring information.

The detection result of availability of the computing resources mainly includes two kinds. One is that the existing computing resource is unavailable, that is, the corresponding computing resource that has been allocated to a current model to be trained is unavailable. The other one is that, in addition to the computing resource that has been allocated to the current model to be trained, other resources are in an idle state, that is, there is an extra available computing resource.

For the unavailable condition, it may be divided into two kinds. One is caused due to computing resource failure. The other one is computing resources in short supply caused due to increase of the number of clients initiating the model training request, which finally results in shrinkage in computing resources.

When the detection result indicates that the computing resources are unavailable, since the number of the existing computing resources is reduced, a remedial measure needs to be started so that a model training process may be continued performed.

Through the above process, a measure for an unexpected situation may be set, to meet normal training of the model to the maximum degree.

As illustrated in FIG. 11, in one implementation, when the unavailable condition is the computing resource failure, a remedial measure is performed as follows.

At block S1101, a training mode included in the model training request initiated by the client is acquired.

At block S1102, failure recovery of the computing resources is waited in response to the training mode being a fault-tolerant training mode.

At block S1103, it is determined that performing ends in response to the computing resource failure being not recovered within a predetermined time.

The training mode included in the model training request may be obtained by parsing the model training request. As mentioned above, the training mode may include a fault-tolerant training mode and an elastic training mode.

For the fault-tolerant training mode, when the computing resource failure occurs, the remedial measure may include, after failures occur in one or more computing resources during a training process, the entire training task may not exit, and a current computing resource is not released either, and training may be continued if a failure node (computing resource) is recovered within a predetermined time, otherwise the task ends and exits.

Continuing training may include continuing training from a failure state, or may include continuing training from an initial state.

Through the above process, task submission, resource allocation, model loading and training starting are not necessarily re-experienced when failure occurs, which may improve a training efficiency of the entire model.

As illustrated in FIG. 12, in one implementation, when the unavailable condition is the computing resource failure, a remedial measure is performed as follows.

At block S1201, candidate computing resources are determined in response to the training mode being an elastic training mode.

At block S1202, training is retried in the candidate computing resources.

The elastic training mode may correspond to a training mode in which dynamic adjustment of the number of computing resources is supported. That is, the number of requested computing resources has been declared within one range in the model training request, and further the number of computing resources may be adjusted based on the range.

In this case, when the computing resource failure occurs, other available computing resources may be selected as candidate computing resources. Training is retried in the candidate computing resources by migrating model training data.

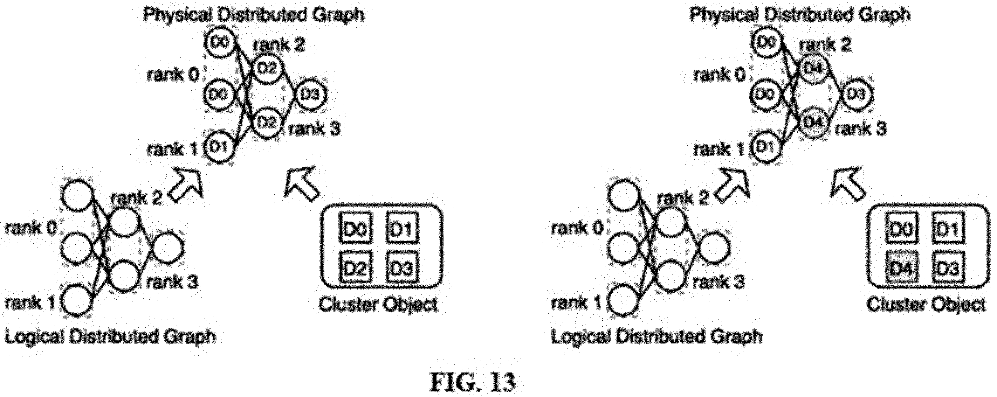

In combination with FIG. 13, the logical distributed graph in FIG. 13 may correspond to the slicing results (rank0 to rank3 corresponding to slices), the cluster object may correspond to the computing resources, and the physical distributed graph may correspond to a distribution strategy. The computing resources include D0 to D4. The example as illustrated on the left side of FIG. 13 is that a failure occurs in the computing resource D2 in a model training process using the computing resources D0 to D3. On the basis of this, the example as illustrated on the right side of FIG. 13 is that the computing resource D4 is taken as a candidate computing resource, and the data originally trained in the computing resource D2 is migrated to the computing source D4 for retrying.

In one implementation, retrying training in the candidate computing resource may include the following situations.

First, a training state is acquired when the computing resource failure occurs; and training is retried in the candidate computing resources based on the training state.

Second, a training initial state is acquired; and training is retried in the candidate computing resources based on the training initial state.

In the first case, the training state of the computing resource may be acquired when a failure occurs in the computing resource, and training may be retried when the failure occurs. The advantage of retrying training when the failure occurs is to save time of performing an entire training process.

In the second case, training may be restarted in the candidate computing resources, that is, training is restarted from an initial state. The advantage of retrying training in the candidate computing resources based on the initial state is that accuracy of the entire training process and integrity of training may be ensured.

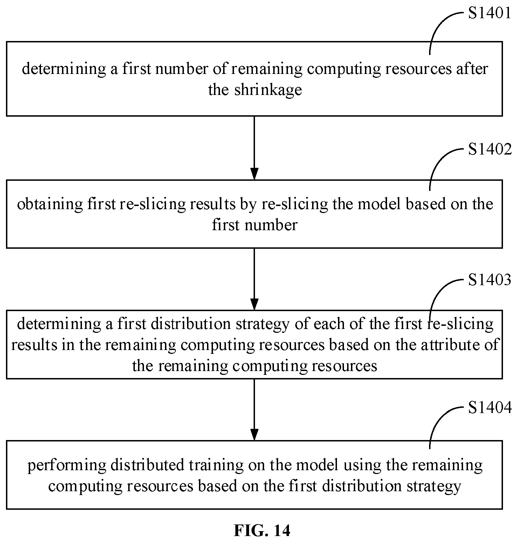

As illustrated in FIG. 14, in one implementation, when the unavailable condition is the shrinkage in the number of computing resources, a remedial measure is performed as follows.

At block S1401, a first number of remaining computing resources after the shrinkage is determined.

At block S1402, first re-slicing results are obtained by re-slicing the model to be trained based on the first number.

At block S1403, a first distribution strategy of each of the first re-slicing results in the remaining computing resources is determined using the attribute of the redetermined remaining computing resources.

At block S1404, distributed training is performed on the model to be trained using the remaining computing resources based on the first distribution strategy.

Increase in the number of clients initiating the model training request or a relatively large number of computing resources requested in the model training request may cause computing resources in short supply. When the computing sources are in short supply, it may result in shrinkage of the computing resources.

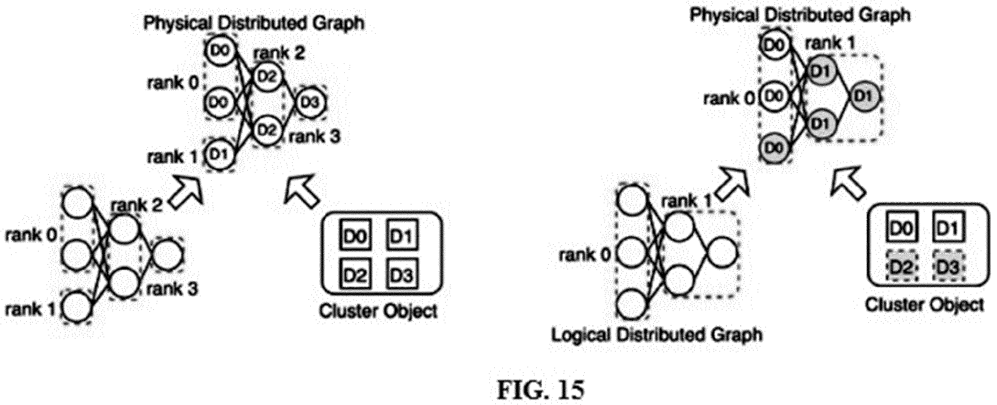

In combination with FIG. 15, the logical distributed graph as illustrated on the left side of FIG. 15 may correspond to slicing results (rank0 to rank3 corresponding to slices), the cluster object may correspond to computing resources, and the physical distributed graph may correspond to a distribution strategy. The computing resources include D0 to D3 in an original training process. As illustrated on the right side of FIG. 15, when shrinkage of the computing resources is triggered, the state of each of the computing resources D2 and D3 may be changed to an unavailable state. Therefore, the first number of the computing resources after shrinkage is 2. Since the computing resources allocated to the model to be trained for training change (are reduced), the computing resources allocated to the model to be trained for training are required to be re-parsed to obtain the attribute of the computing resources, and acquire the topology information of the computing resources.

The model to be trained is re-sliced based on the first number. The slicing manner is the same as the foregoing process, which is not repeated here. After re-slicing is performed as illustrated on the right side of FIG. 15, the slicing results are two slices, corresponding to rank0 and rank1. A first distribution strategy of the two slices in the computing resources after shrinkage is determined using the attribute of the remaining computing resources (D0 and D1). That is, as illustrated on the right side of FIG. 15, the computing resource D0 is allocated to the new slice rank0 and the computing resource D1 is allocated to the new slice rank1 based on the first distribution strategy.

In a subsequent training process, the training process continues to be performed by the remaining computing resources (D0 and D1). The entire process remains to be performed in an automated manner without human intervention.

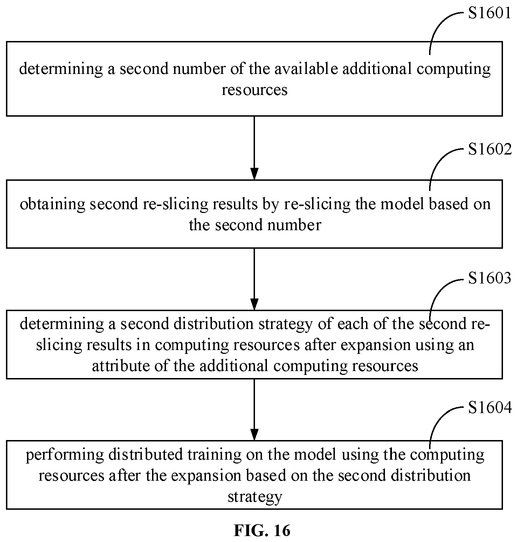

As illustrated in FIG. 16, in one implementation, when the detection result indicates that there are available additional computing resources, the method includes the followings.

At block S1601, a second number of the available additional computing resources is determined.

At block S1602, second re-slicing results are obtained by re-slicing the model to be trained based on the second number.

At block S1603, a second distribution strategy of each of second re-slicing results in the computing resources after expansion is determined using an attribute of the redetermined additional computing resources.

At block S1604, distributed training is performed on the model to be trained using the computing resources after the expansion based on the second distribution strategy.

Deduction in the number of clients initiating the model training request or a small number of computing resources requested in the model training request may cause computing resources in over supply. When the computing sources are in over supply, it may result in expansion of the computing resources, that is, more computing resources may be additionally allocated to the model training task. Since the computing resources allocated to a model to be trained for training change (are increased), the computing resources allocated to the model to be trained for training are required to be re-parsed to obtain the attribute of the computing resources, and acquire the topology information of the computing resources.

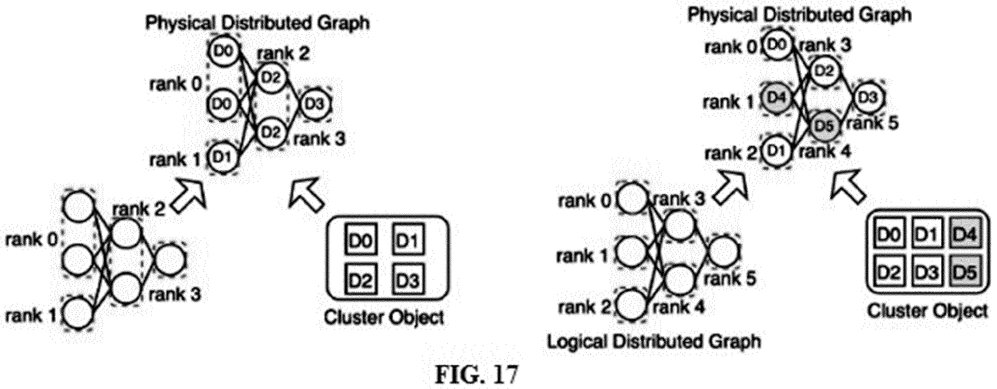

In combination with FIG. 17, FIG. 17 may correspond to an adjustment after expansion of computing resources. The logical distributed graph as illustrated on the left side of FIG. 17 may correspond to slicing results (rank0 to rank3 corresponding to slices), the cluster object may correspond to computing resources, and the physical distributed graph may correspond to a distribution strategy. The computing resources include D0 to D3 in an original training process. As illustrated on the right side of FIG. 17, when expansion of the computing resources is triggered, the state of each of the additional computing resources D4 and D5 may be changed to an available state. Therefore, the second number of the computing resources after expansion is 6.

The model to be trained is re-sliced based on the second number. The slicing manner is the same as the foregoing process, which is not repeated here. After re-slicing is performed as illustrated on the right side of FIG. 17, the slicing results are 6 slices, corresponding to rank0 to rank5. A second distribution strategy of five slices in the computing resources after expansion is determined using the attribute of the expanded computing resources (D0 to D5). That is, as illustrated on the right side of FIG. 17, the computing resource D0 is allocated to the new slice rank0, the computing resource D4 is allocated to the new slice rank1, the computing resource D1 is allocated to the new slice rank2, the computing resource D5 is allocated to the new slice rank3, the added computing resource D5 is allocated to the new slice rank4, and the computing resource D3 is allocated to the new slice rank5 based on the second distribution strategy.

Through the above process, when the computing resources are expanded, the model to be trained may be re-sliced, thereby achieving maximum use of the computing resources.

In one implementation, when the number of the computing resources changes, the method further includes: adjusting a learning rate of the model to be trained and a number of samples selected for a single training based on the changed number.

When elastic expansion and shrinkage is performed, there is a certain mechanism to ensure that the learning rate and the number of samples (batch_size) selected for a single training are adjusted. The learning rate may be a hyper-parameter configured to update parameters of the model to be trained.

For example, the adjustment of the learning rate and batch_size may be triggered through a port, or the two items may be automatically adjusted when it is detected that the number of the computing resources changes, so that an influence on a training convergence and a training effect is minimized or even zero.

In one implementation, the distributed training includes: decentralized asynchronous pipeline training.

The decentralized asynchronous pipeline performing manner may achieve parallel execution of a plurality of computing resources, and data with an upstream and downstream logical relation may be automatically associated to achieve parallelization and dynamic of the data. Therefore, concurrency of communication and computation may be improved to the greatest extent, and a training efficiency may be improved. Further, respective sub-tasks are decoupled, so that one task may run on various types of devices.

When the computing resources change, a change of a slicing strategy may be triggered, and a process needs to be restarted to perform decentralized asynchronous pipeline training. Each process includes a thread accepting services, a message queue, and a plurality of threads processing messages.

A message includes sending a process number, receiving a process number, and task information.

The thread receiving services may continuously accept a message and put the message in the message queue.

The thread processing services may continuously read a message from the message queue and perform processing based on task information of the message.

After execution, the result may be sent to a next device based on the message.

Different sub-tasks are concurrently processed between adjacent devices.

In the case of fault tolerance, capacity expansion or capacity shrinkage, a unified computing view and a unified resource view may be triggered to be reconstructed, re-slicing and mapping are performed, and an execution task is reconstructed and a process is started to execute a training process.

In one implementation, the model to be trained is obtained based on the model training request initiated by the client.

The entire model training platform may be an end-to-end training platform. A client only needs to determine related information of the model to be trained, the number of required computing resources and an expected training effect. The entire training process is automatically executed on the end-to-end training platform, and the client only needs to determine basic information in the model training request without performing other operations. Thus, the difficulty for a user may be simplified and full automation of a model may be achieved.

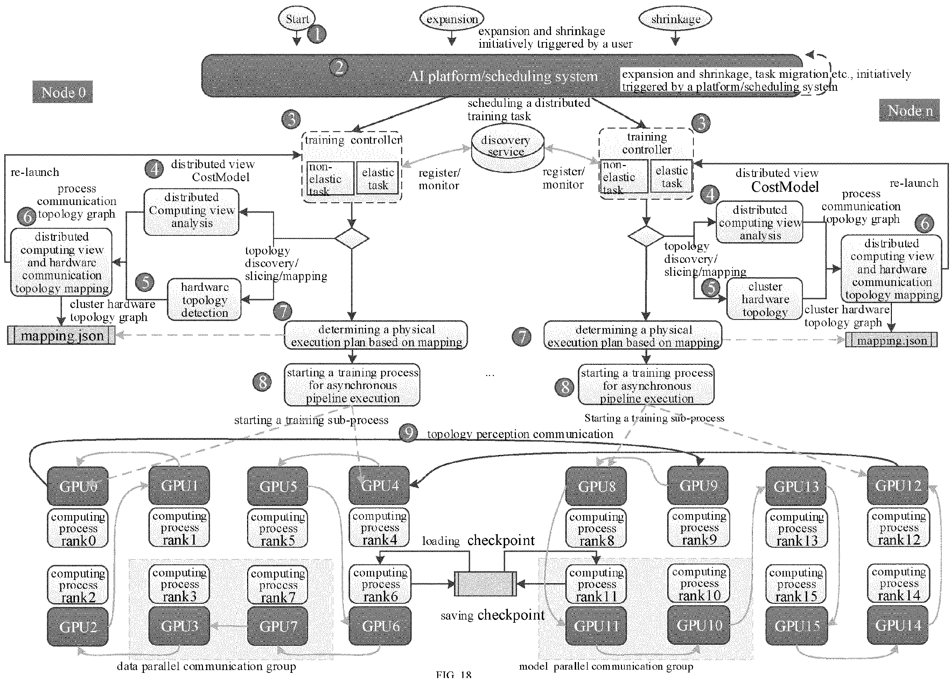

As illustrated in FIG. 18, the present disclosure relates to a distributed training method based on end-to-end adaption, and the method may include the followings.
1. A user submits a training task: the user initiates a distributed deep learning (a model to be trained) training task on a training platform, the type of the training task may include an elastic training task and a non-elastic training task, and the elastic training tasks may be classified into a fault-tolerant mode and an elastic expansion and shrinkage mode. When the number of the specified computing nodes is a fixed value (for example, node_nums=2 or node_nums=2:2), it indicates the fault-tolerant mode; when the number of the specified computing nodes is a range (for example, node_nums=2:4), it indicates the elastic expansion and shrinkage mode.
2. Intelligent scheduling: an AI platform scheduling system of the training platform (for example, a paddle-operator based on k8s) is responsible for scheduling the distributed deep learning training task, taking the entire training task as a whole for life cycle management, and providing a port for performing expansion and shrinkage operations for the training task. From a platform perspective, the training task may be autonomously triggered based on an overall resource usage situation to perform expansion and shrinkage operations of computing resources, or a part of computing resources may be dynamically migrated based on consideration of fragment arrangement. The operations may be performed without interrupting the current training task.
3. An elastic training controller: the training controller is responsible for distributing and starting the training task, and the training tasks may be classified into an elastic task and a non-elastic task. When the training task is the elastic training task, after the task is started, the controller may register the controller itself and its monitored sub-process into a "discovery service" (ETCD), and the elastic training controller also senses states of other controllers and their sub-processes (node downtime or unavailable, or card failure, etc.) through the "discovery service". When the elastic training controller perceives that another node changes (node or card failing and exiting or capacity expansion and shrinkage), existing nodes are reserved, and the training process (including sub-processes) is recovered.

The elastic training task includes two modes: a fault-tolerant mode and an elastic mode.

For a task in the fault-tolerant mode, after a failure occurs in one or more computing resources during the training process (a node is unavailable or a GPU card fails), the entire training task may not exit, and a current computing resource is not released either, and training may be continued if a failure node is recovered within a timeout period (continue training from a failure moment), otherwise the task fails and exits.

For a task in the elastic expansion and shrinkage mode, after a failure occurs in one or more training computing resources during the training process (a node is unavailable or a GPU card fails) or a manual/automatic expansion and shrinkage operation is performed, the entire training task may not exit, a current computing resource is not released either, and training may be continued with a number of nodes after expansion or shrinkage (continue training from a pause moment).

When elastic expansion and shrinkage is performed, there may be a certain mechanism to ensure adjustment of a learning rate and batch_size (adjustment of the learning rate and batch_size is triggered through a port or performed automatically), thereby minimizing or not generating an influence on training convergence and effect.
4. Distributed computing view analysis: the training process of the model may be described as a computing data flow graph. As long as each operator and each tensor are parallelized, network layers in the entire model may be parallelized, to transform the computing view executed in sequence into a distributed computing view. Any slicing strategy may be supported using concepts such as a distributed tensor, a distributed operator, a recombination transformation and a finer-grained distributed attribute, and slicing results of the model to be trained may be finally obtained. In addition, decoupling of a slicing strategy independent of a device and a placement strategy dependent on a device is further supported. The distributed attribute may include logical process topology information (process_mesh), tensor each-dimension slicing mapping information (dims_mapping), tensor each-dimension slice size information (shard_sizes) and slice physical device placement information (device_placement). Each distributed tensor and each distributed operator may carry corresponding distributed attributes, and it is supported that the distributed attribute of a tensor is different from the corresponding distributed attribute in an operator using the tensor, which is beneficial to storage and calculation separation.
5. Cluster hardware topology detection: a cluster resource view is generated based on attribute information of cluster hardware resources corresponding to the training task, that is, attributes of corresponding computing resources. In other words, the cluster hardware resources (including a machine, a switch) may be abstractly represented, which not only includes topology information between the devices, but also includes processing capability related information of a processor, a video memory and a bandwidth in the device, so that shielding of a specific connection manner and differences between clusters, between internal hardware in a cluster, and inside a hardware is achieved, and various heterogeneous hardware and cluster environments may be supported.
6. Distributed computing view and hardware communication topology mapping: a placement strategy of the distributed training task is determined and a placement strategy mapping file is generated based on the distributed computing view at step 4 and the cluster resource view at step 5. The placement strategy may correspond to a distribution strategy of slicing results in the computing resources.

When topology mapping is completed, execution of scheduling the task training task may be formally started.

7. Construct a physical execution plan: the physical execution plan is generated based on the placement strategy mapping file at step 6, the physical execution plan includes a computing process (a distributed computing view) and a hardware placement strategy. In addition, the physical execution plan is further combined with an elastic resource management mechanism, so that elastic expansion and shrinkage may be achieved when the computing resources are idle or busy, the number of the computing nodes is dynamically adjusted, and the re-slicing can be performed as required.

The design decouples logical slicing and physical mapping to be better compatible with heterogeneous hardware. In addition, a distributed operator and a distributed tensor are also decoupled to better expand to different parallel strategies. When the definition of the input/output tensor does not match the definition of the operator, a framework may automatically insert a recombination transformation operator to ensure correctness of computation. When the device of the input/output tensor is inconsistent with the device of the operator, the framework may automatically insert a communication operator to ensure correctness of cross-device slicing. When used by a user, not only the framework may automatically complete slicing using a full-automatic mode, but also a desired slicing strategy may be defined through an API interface.

8. Asynchronous pipeline executor: distributed training is performed on the deep learning model to be trained based on the physical execution plan at step 7. Through a decentralized asynchronous pipeline executor, concurrency of communication and computation may be improved to the greatest extent, and a training efficiency may be improved. Further, respective sub-tasks are decoupled, so that one task may run on various types of devices.

9. Topology perception communication: different computing view parallel communication modes are automatically constructed based on the physical execution plan at an execution phase, and different parallel modes are performed through different communication sub-domains, and a plurality of parallel modes may exist at the same time, for example, data parallel may be adopted for a first communication sub-domain, and model parallel may be adopted for a second communication sub-domain. Perception communication may be performed using a checkpoint in FIG. 18.

In general, the training process of a model to be trained is an end-to-end adaptive process. Change of a node represented by a computing resource may trigger the entire system, including construction of two views (a distributed computing view corresponding to model slicing, a cluster resource view corresponding to determination of an attribute of the computing resources), construction of a specific task to be performed (a distribution strategy of slicing results in the computing resources), start of process training, distribution of training tasks, a computing node performing the training task, etc.

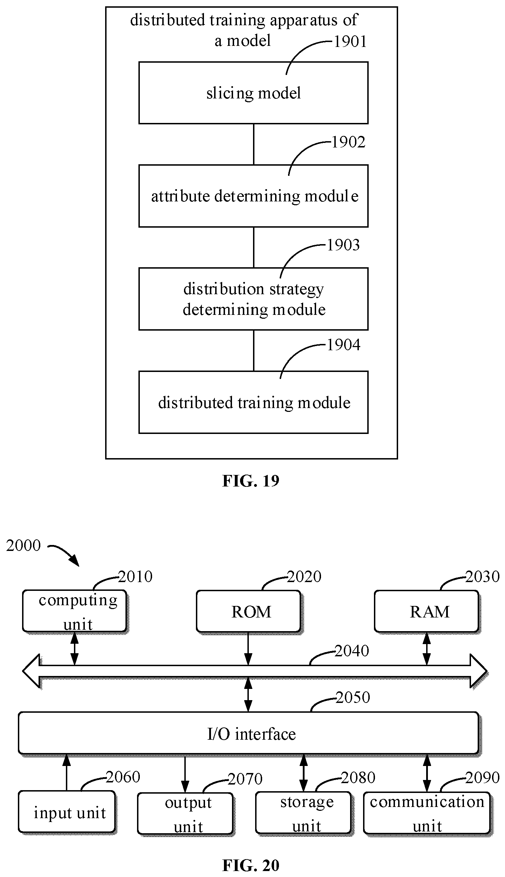

As illustrated in FIG. 19, the present disclosure relates to a distributed training apparatus based on end-to-end adaption, and the apparatus may include a slicing module 1901, an attribute determining module 1902, a distribution strategy determining module 1903 and a distributed training module 1904.

The slicing module 1901 is configured to obtain slicing results by slicing a model to be trained.

The attribute determining module 1902 is configured to obtain an attribute of computing resources allocated to the model to be trained for training by parsing the computing resources, the computing resources are determined based on a computing resource requirement of the model to be trained, computing resources occupied by another model being trained, and idle computing resources, and the attribute of the computing resources is configured to represent at least one of a topology relation and a task processing capability of the computing resources.

The distribution strategy determining module 1903 is configured to determine a distribution strategy of each of the slicing results in the computing resources using the attribute of the computing resources.

The distributed training module 1904 is configured to perform distributed training on the model to be trained using the computing resources based on the distribution strategy.

The slicing module 1901 specifically includes an operator and tensor determining submodule and a slicing performing submodule.

The operator and tensor determining submodule is configured to determine operators and tensors in the model be trained.

The slicing performing submodule is configured to obtain the slicing results by slicing the operators and the tensors in the model to be trained using a slicing strategy.

In one implementation, the slicing performing submodule may specifically include a slicing strategy performing unit, and a distributed attribute information loading unit.

The slicing strategy performing unit is configured to obtain N slices by slicing the operators and the tensors in the model to trained using the slicing strategy, the N being a positive integer.

The distributed attribute information loading unit is configured to, for each slice, load distributed attribute information of the slice, in which the distributed attribute information includes at least one of process topology information of the slice in the model to be trained, slicing mapping information of the slice and slice size information of the slice; and take a slice loaded with the distributed attribute information as the slicing result.

In one implementation, the distributed attribute information loading unit may include a candidate category receiving subunit, and a screening subunit.

The candidate category receiving subunit is configured to receive a plurality of candidate categories of the distributed attribute information in a predetermined manner.

The screening subunit is configured to determine a target category from a plurality of candidate categories as the category of distributed attribute information.

In one implementation, the apparatus further includes a placement information loading unit.

The placement information loading unit is specifically configured to: determine placement information of each of the slices using a distributed attribute of each of the slices, in which the placement information is configured to represent a physical mapping relation between the slice and the computing resources.

In one implementation, when the slices are located at adjacent network layers of the model to be trained and have different placement information, the apparatus includes a communication auxiliary operator determining unit.

The communication auxiliary operator determining unit may be configured to: determine a communication auxiliary operator using the placement information, the communication auxiliary operator is configured to represent a logical operation relation between the slices.

In one implementation, when the slices are located at a same network layer of the model, the apparatus includes a recombination transformation operator determining unit.

The recombination transformation operator determining unit specifically may be configured to: determine a recombination transformation operator, the recombination transformation operator is configured to represent a network layer consistency relation between the slices.

In one implementation, the slicing performing submodule may include a slicing strategy determining unit.

The slicing strategy determining unit is configured to determine the slicing strategy by parsing a model training request initiated by a client.

In one implementation, the slicing performing submodule may include a slicing strategy determining unit.

The slicing strategy determining unit is configured to determine the slicing strategy using a pre-trained slicing strategy model.

In one implementation, the attribute determining module 1902 may be configured to: determine a hardware topology relation of the computing resources as the attribute of the computing resource.

In one implementation, the attribute determining module 1902 may include a minimum component determining submodule, a machine determining submodule and a cluster determining submodule.

The minimum component determining submodule is configured to determine a minimum component in the computing resources, the minimum component includes a processor or a memory.

The machine determining submodule is configured to determine a machine including at least one minimum component, the minimum component in each machine is not repeated.

The cluster determining submodule is configured to determine a cluster including at least one machine, the machine in each cluster is not repeated; and take the minimum component, the machine and the cluster as the hardware topology relation of the computing resources.

In one implementation, the attribute determining module 1902 specifically may be configured to: determine an affinity list of each minimum component; the affinity list includes at least one of a connection relation between a source minimum component and a destination minimum component, bandwidth information and latency information; and take the affinity list as the hardware topology relation of the computing resource.

In one implementation, the computing resources allocated to the model for training are determined based on at least one of a content of a model training request initiated by a client, and a number of clients that initiate the model training request.

In one implementation, the attribute determining module 1902 may include a communication path acquiring submodule and a communication topology relation constructing submodule.

The communication path acquiring submodule is configured to acquire a communication path of the computing resource.

The communication topology relation constructing submodule is configured to construct a communication topology relation between the computing resources using the communication path of the computing resources; and take the communication topology relation as the attribute of the computing resources.

In one implementation, the apparatus further includes a shortest communication path constructing submodule.

The shortest communication path constructing submodule specifically may be configured to: determine a shortest communication path between a source computing resource and a target computing resource based on the communication topology relation.

In one implementation, the distribution strategy determining module 1903 may include a candidate distribution strategy acquiring submodule, an efficiency determining submodule and a target distribution strategy determining submodule.

The candidate distribution strategy acquiring submodule is configured to acquire candidate distribution strategies of respective slicing results in the computing resource.

The efficiency determining submodule is configured to determine an efficiency of each of the candidate distribution strategies.

The target distribution strategy determining submodule is configured to determine a target distribution strategy in the candidate distribution strategies based on the efficiency of each of candidate distribution strategies.

In one implementation, the target distribution strategy determining submodule includes a sorting unit and a result determining unit.

The sorting unit is configured to sort the candidate distribution strategies using a predetermined rule.

The result determining unit is configured to determine the target distribution strategy in the candidate distribution strategies based on a sorting result.

In one implementation, the distributed training module 1904 may include an availability detection submodule and a remedial measure performing submodule.

The availability detection submodule is configured to periodically detect availability of the computing resource.

The remedial measure performing submodule is configured to perform a remedial measure in response to a detection result indicating that the computing resources are in an unavailable condition, the unavailable condition including computing resource failure or shrinkage in a number of the computing resources.

In one implementation, when the unavailable condition is computing resource failure, the remedial measure performing submodule may include a training mode acquiring unit, a waiting unit and a result determining unit.

The training mode acquiring unit is configured to acquire a training mode included in a model training request initiated by the client.

The waiting unit is configured to wait for failure recovery of the computing resources in response to the training mode being a fault-tolerant training mode.

The result determining unit is configured to determine that performing ends in response to the computing resource failure is not recovered within a predetermined time.

In one implementation, when the unavailable condition is computing resource failure, the remedial measure performing submodule further may include a candidate computing resource determining unit and a retrying unit.

The candidate computing resource determining unit is configured to determine candidate computing resources in response to the training mode being an elastic training mode.

The retrying unit is configured to retry training in the candidate computing resource.

In one implementation, the retrying unit may include a training state acquiring subunit and a retrying performing subunit.

The training state acquiring subunit is configured to acquire a training state when the computing resource failure occurs.

The retrying performing subunit is configured to retry training in the candidate computing resources based on the training state.

In one implementation, the retrying unit may include an initial state acquiring subunit and a retrying performing subunit.

The initial state acquiring subunit is configured to acquire a training initial state.

The retrying performing subunit is configured to retry training in the candidate computing resources based on the training initial state.

In one implementation, when the unavailable condition is shrinkage in the number of computing resources, the remedial measure performing submodule may include a first number determining unit, a first re-slicing unit, a first distribution strategy determining unit and a distributed training performing unit.

The first number determining unit is configured to determine a first number of remaining computing resources after the shrinkage.

The first re-slicing unit is configured to obtain first re-slicing results by re-slicing the model based on the first number.

The first distribution strategy determining unit is configured to determine a first distribution strategy of each of the first re-slicing results in the remaining computing resources based on the attribute of the remaining computing resources.

The distributed training performing unit is configured to perform distributed training on the model using the remaining computing resources based on the first distribution strategy.

In one implementation, in response to the detection result indicating that there are available additional computing resources, the apparatus may include a second number determining unit, a second re-slicing unit, a second distribution strategy determining unit and a distributed training performing unit.

The second number determining unit is configured to determine a second number of the available additional computing resources.

The second re-slicing unit is configured to obtain second re-slicing results by re-slicing the model based on the second number.

The second distribution strategy determining unit is configured to determine a second distribution strategy of each of the second re-slicing results in computing resources after expansion using an attribute of the additional computing resources.

The distributed training performing unit is configured to perform distributed training on the model using the computing resources after the expansion based on the second distribution strategy.

In one implementation, in response to the number of the computing resources changing, it further includes an adjustment subunit.

The adjustment subunit specifically may be configured to: adjust a learning rate of the model to be trained and a number of samples selected for a single training based on the changed number.

In one implementation, distributed training includes: decentralized asynchronous pipeline training.

In one implementation, the model to be trained is obtained based on a model training request initiated by a client.

In the technical solution of the present disclosure, processings such as acquisition, storage and application of user personal information involved in the present disclosure conform to the provisions of relevant legal regulations, and do not violate the public-order yield.

In the embodiment of the present disclosure, an electronic device, a readable storage medium and a computer program product are further provided according to embodiments of the present disclosure

FIG. 20 is a schematic block diagram illustrating an example electronic device 2000 in the embodiment of the present disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 20, a device 2000 includes a computing unit 2010, configured to execute various appropriate actions and processes according to a computer program stored in a read-only memory (ROM) 2020 or loaded from a storage unit 2080 to a random-access memory (RAM) 2030. In a RAM 2030, various programs and data required for a device 2000 may be stored. A computing unit 2010, a ROM 2020 and a RAM 2030 may be connected with each other by a bus 2040. An input/output (I/O) interface 2050 is also connected to a bus 2040.

A plurality of components in the device 2000 are connected to an I/O interface 2050, and includes: an input unit 2060, for example, a keyboard, a mouse, etc.; an output unit 2070, for example various types of displays, speakers; a storage unit 2080, for example a magnetic disk, an optical disk; and a communication unit 2090, for example, a network card, a modem, a wireless transceiver. The communication unit 2090 allows a device 2000 to exchange information/data through a computer network such as internet and/or various types of telecommunication networks and other devices.

A computing unit 2010 may be various types of general and/or dedicated processing components with processing and computing ability. Some examples of the computing unit 2010 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 2010 executes various methods and processings as described above, for example, a method for distributed training based on end-to-end adaption. For example, in some embodiments, the method for distribution training based on end-to-end adaption may be further implemented as a computer software program, which is physically contained in a machine-readable medium, such as a storage unit 2080. In some embodiments, a part or all of the computer program may be loaded and/or installed on the device 2000 through a ROM 2020 and/or a communication unit 2090. When the computer program is loaded on a RAM 2030 and executed by a computing unit 2010, one or more blocks in the method for distributed training based on end-to-end adaption as described above may be performed. Alternatively, in other embodiments, a computing unit 2010 may be configured to perform a method for distributed training based on end-to-end adaption in other appropriate methods(for example, by virtue of a firmware).

Various implementation modes of systems and technologies described herein may be implemented in a digital electronic circuit system, an integrated circuit system, a field programmable gate array (FPGA), a dedicated application specific integrated circuit (ASIC), a system on a chip (SoC), a load programmable logic device (CPLD), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of multiple programming languages. These programming languages may be provided to a processor or a controller of a general-purpose computer, a dedicated computer, or other apparatuses for programmable data processing so that the function/operation specified in the flowchart and/or block diagram may be performed when the program code is executed by the processor or controller. A computer code may be executed completely or partly on the machine, executed partly on the machine as an independent software package and executed partly or completely on the remote machine or server.

In the context of the present disclosure, a machine-readable medium may be a tangible medium that may contain or store a program intended for use in or in conjunction with an instruction execution system, apparatus, or device. A machine-readable medium may be a machine-readable signal medium or a machine-readable storage medium. A machine-readable storage medium may include but not limited to an electronic, magnetic, optical, electromagnetic, infrared, or semiconductor system, apparatus or device, or any appropriate combination thereof. A more specific example of a machine-readable storage medium includes an electronic connector with one or more cables, a portable computer disk, a hardware, a random-access memory (RAM), a read-only memory (ROM), an EPROM programmable read-only ROM (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or an LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a speech input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), a blockchain network, and an internet.

The computer system may include a client and a server. The client and server are generally far away from each other and generally interact with each other through a communication network. The relation between the client and the server is generated by computer programs that run on the corresponding computer and have a client-server relationship with each other. A server may be a cloud server, and further may be a server with a distributed system, or a server in combination with a blockchain.

## Claims

1. An automatic and distributed method for training a model, executed on an end-to-end training platform, comprising:
obtaining (S101) slicing results by slicing a model to be trained, comprising: determining (S201) operators and tensors of the model; and obtaining (S202) the slicing results by slicing the operators and the tensors in the model based on a slicing strategy, the slicing results being distributed operators and distributed tensors, wherein, the slicing strategy is determined by parsing a model training request initiated by a client; or using a pre-trained slicing strategy model;
obtaining (S102) an attribute of computing resources allocated to the model for training by parsing computing resources, wherein the computing resources is determined based on a number of clients that initiate a model training request and a minimum computing power and a maximum computing power of required computing resources parsed from the model training request in response to receiving the model training request of the model to be trained submitted by a client, wherein the attribute of the computing resources comprises a communication topology relation and a hardware topology relation;
wherein, obtaining (S102) the attribute of the computing resources allocated to the model for training by parsing the computing resources, comprises:
determining the hardware topology relation of the computing resources as the attribute of the computing resource;
wherein determining the hardware topology relation of the computing resources, comprises:
determining (S601) a minimum component in the computing resources, wherein the minimum component comprises a processor or a memory;
determining (S602) a machine comprising at least one minimum component, wherein the minimum component in each machine is not repeated;
determining (S603) a cluster comprising at least one machine, wherein the machine in each cluster is not repeated; and
taking (S604) the minimum component, the machine and the cluster as the hardware topology relation of the computing resources;determining (S103) a distribution strategy of each of the slicing results in the computing resources based on the attributes of the computing resources; and
performing (S104) distributed training on the model using the computing resources based on the distribution strategy and an available condition of the computing resources detected periodically,
wherein obtaining the attribute of the computing resources allocated to the model for training by parsing the computing resources, comprises:
acquiring (S801) the communication path of the computing resources;
constructing (S802) a communication topology relation between the computing resources based on the communication path of the computing resources; and
taking (S803) the communication topology relation as the attribute of the computing resources,
wherein, obtaining (S202) the slicing results by slicing the operators and the tensors in the model based on the slicing strategy, comprises:
obtaining (S401) N slices by slicing the operators and the tensors in the model based on the slicing strategy, the N being a positive integer;
for each of the N slices, loading (S402) distributed attribute information of the slice, wherein the distributed attribute information comprises at least one of process topology information of the slice in the model, slicing mapping information of the slice and slice size information of the slice; determining placement information of each of the N slices based on the distributed attribute information of each of the N slices, wherein the placement information is configured to represent a physical mapping relation between the N slices and the computing resources; and
taking (S403) the slice loaded with the distributed attribute information as the slicing result;
wherein the method further comprises:
determining a shortest communication path between a source computing resource and a target computing resource based on the communication topology relation.

2. The method of claim 1,
wherein a category of the distributed attribute information is determined by:
receiving (S501) a plurality of candidate categories of the distributed attribute information in a predetermined manner; and
determining (S502) a target category from the plurality of candidate categories as the category of the distributed attribute information.

3. The method of claim 2,
wherein, when the slices are located at adjacent network layers of the model and have different placement information, the method comprises:
determining a communication auxiliary operator based on the placement information, wherein the communication auxiliary operator is configured to represent a logical operation relation between the slices;
wherein, when the slices are located at a same network layer of the model, the method comprises:
determining a recombination transformation operator, wherein the recombination transformation operator is configured to represent a network layer consistency relation between the slices.

4. The method of claim 1, wherein determining the hardware topology relation of the computing resources further comprises:
determining an affinity list of each minimum component, wherein the affinity list comprises at least one of a connection relation between a source minimum component and a target minimum component, bandwidth information and latency information; and
taking the affinity list as the hardware topology relation of the computing resources.

5. The method of claim 1, wherein, determining (S103) the distribution strategy of each of the slicing results in the computing resources based on the attribute of the computing resources, comprises:
acquiring (S901) candidate distribution strategies of respective slicing results in the computing resources;
determining (S902) an efficiency of each of the candidate distribution strategies; and
determining (S903) a target distribution strategy in the candidate distribution strategies based on the efficiency of each of the candidate distribution strategies.

6. The method of claim 1 or 5, wherein, determining (S903) the target distribution strategy in the candidate distribution strategies based on the efficiency of each of the candidate distribution strategies, comprises:
sorting the candidate distribution strategies based on a predetermined rule; and
determining the target distribution strategy in the candidate distribution strategies based on a sorting result.

7. The method of claim 1, wherein, performing (S104) distributed training on the model using the computing resources based on the distribution strategy and an available condition of the computing resources detected periodically, comprises:
periodically (S1001) detecting availability of the computing resources; and
performing (S1002) a remedial measure in response to a detection result indicating that the computing resources are in an unavailable condition, the unavailable condition comprising computing resource failure or shrinkage in a number of the computing resources.

8. The method of claim 7, wherein performing (S1002) the remedial measure in response to the unavailable condition being the computing resource failure, comprises:
acquiring (S1101) a training mode comprised in a model training request initiated by a client;
waiting (S1102) for failure recovery of the computing resources in response to the training mode being a fault-tolerant training mode; and
determining (S1103) that performing ends in response to the computing resource failure is not optionally within a predetermined time;
wherein performing (S1002) the remedial measure in response to the unavailable condition being computing resource failure, further comprises:
determining (S1201) candidate computing resources in response to the training mode being an elastic training mode; and
retrying (S1202) training in the candidate computing resources;
wherein
retrying (S1202) training in the candidate computing resources, comprises: acquiring a training state when the computing resource failure occurs; and retrying training in the candidate computing resources based on the training state;
or,
retrying (S1202) training in the candidate computing resources, comprises: acquiring a training initial state; and retrying training in the candidate computing resources based on the training initial state.

9. The method of claim 7, wherein, performing (S1002) the remedial measure in response to the unavailable condition being the shrinkage in the number of the computing resources, comprises:
determining (S1401) a first number of remaining computing resources after the shrinkage;
obtaining (S1402) first re-slicing results by re-slicing the model based on the first number;
determining (S1403) a first distribution strategy of each of the first re-slicing results in the remaining computing resources based on the attribute of the remaining computing resources; and
performing (S1404) distributed training on the model using the remaining computing resources based on the first distribution strategy.

10. The method of claim 7, in response to the detection result indicating that there are available additional computing resources, comprising:
determining (S1601) a second number of the available additional computing resources;
obtaining (S1602) second re-slicing results by re-slicing the model based on the second number;
determining (S1603) a second distribution strategy of each of the second re-slicing results in computing resources after expansion using an attribute of the additional computing resources; and
performing (S1604) distributed training on the model using the computing resources after the expansion based on the second distribution strategy.

11. The method of claim 9 or 10, in response to the number of the computing resources changing, further comprising:
adjusting a learning rate of the model and a number of samples selected for a single training based on the changed number.

12. The method of any one of claims 1-11, wherein, the distributed training comprises: decentralized asynchronous pipeline training;
wherein the model is obtained based on a model training request initiated by a client.

13. An automatic and distributed training apparatus for training a model, executed on an end-to-end training platform, comprising:
a slicing module (1901), configured to obtain slicing results by slicing a model to be trained;
an attribute determining module (1902), configured to obtain an attribute of computing resources allocated to the model for training by parsing computing resources, wherein the computing resources is determined based on a number of clients that initiate a model training request and a minimum computing power and a maximum computing power of required computing resources parsed from the model training request in response to receiving the model training request of the model to be trained submitted by a client, wherein the attribute of the computing resources comprises a communication topology relation and a hardware topology relation, the attribute determining module (1902) further configured to determine the hardware topology relation of the computing resources as the attribute of the computing resource, by determining a minimum component in the computing resources, wherein the minimum component comprises a processor or a memory; determining a machine comprising at least one minimum component, wherein the minimum component in each machine is not repeated; determining a cluster comprising at least one machine, wherein the machine in each cluster is not repeated; and taking the minimum component, the machine and the cluster as the hardware topology relation of the computing resources, the attribute determining module (1902) further configured to determine the hardware topology relation of the computing resources as the attribute of the computing resource;
a distribution strategy determining module (1903), configured to determine a distribution strategy of each of the slicing results in the computing resources based on the attributes of the computing resources, wherein, the slicing strategy is determined by parsing a model training request initiated by a client; or using a pre-trained slicing strategy model; and
a distributed training module (1904), configured to perform distributed training on the model using the computing resources based on the distribution strategy and an available condition of the computing resources detected periodically,
wherein the slicing module (1901) comprises:
an operator and tensor determining submodule, configured to determine operators and tensors of the model; and
a slicing performing submodule, configured to obtain the slicing results by slicing the operators and the tensors in the model based on a slicing strategy by obtaining N slices by slicing the operators and the tensors in the model based on the slicing strategy, the N being a positive integer; for each of the N slices, by loading distributed attribute information of the slice, wherein the distributed attribute information comprises at least one of process topology information of the slice in the model, slicing mapping information of the slice and slice size information of the slice; determining placement information of each of the N slices based on the distributed attribute information of each of the N slices, wherein the placement information is configured to represent a physical mapping relation between the N slices and the computing resources; and by taking the slice loaded with the distributed attribute information as the slicing result,
wherein the slicing results are distributed operators and distributed tensors,
wherein the attribute determining module (1902) includes:
a communication path acquiring submodule, configured to acquire a communication path of the computing resource; and
a communication topology relation constructing submodule, configured to construct a communication topology relation between the computing resources using the communication path of the computing resources; to take the communication topology relation as the attribute of the computing resources, and to determine a shortest communication path between a source computing resource and a target computing resource based on the communication topology relation.

14. A non-transitory computer-readable storage medium having computer instructions stored thereon, wherein the computer instructions are configured to cause a computer to perform the method of any one of claims 1 to 12.

15. A computer program product comprising a computer program/instruction, wherein, the computer program/instruction is configured to implement the steps of the method of any one of claims 1 to 12 when performed by a processor.

## Patentansprüche

1. Automatisches und verteiltes Verfahren zum Trainieren eines Modells, das auf einer Ende-zu-Ende-Trainingsplattform ausgeführt wird, folgende Schritte umfassend:
Erhalten (S101) von Slicing-Ergebnissen durch das Slicen eines zu trainierenden Modells, folgende Schritte umfassend: Bestimmen (S201) von Operatoren und Tensoren des Modells; und Erhalten (S202) der Slicing-Ergebnisse durch das Slicen der Operatoren und der Tensoren in dem Modell auf der Grundlage einer Slicing-Strategie, wobei die Slicing-Ergebnisse verteilte Operatoren und verteilte Tensoren sind, wobei die Slicing-Strategie durch das Parsen einer von einem Client initiierten Modelltrainingsanforderung bestimmt wird; oder durch das Verwenden eines vorher trainierten Slicing-Strategie-Modells;
Erhalten (S102) eines Attributs von Rechenressourcen, die dem Modell zum Trainieren zugeordnet sind, durch das Parsen von Rechenressourcen, wobei die Rechenressourcen auf der Grundlage einer eine Modelltrainingsanforderung initiierenden Anzahl von Clients und einer minimalen Rechenleistung und einer maximalen Rechenleistung von geforderten Rechenressourcen, die als Reaktion auf das Empfangen der von einem Client eingereichten Modelltrainingsanforderung des zu trainierenden Modells aus der Modelltrainingsanforderung geparst werden, bestimmt werden, wobei das Attribut der Rechenressourcen eine Kommunikationstopologiebeziehung und eine Hardware-Topologie-Beziehung umfasst;
wobei das Erhalten (S102) des Attributs der Rechenressourcen, die dem Modell zum Trainieren zugeordnet sind, durch das Parsen der Rechenressourcen folgenden Schritt umfasst:
Bestimmen der Hardware-Topologie-Beziehung der Rechenressourcen als das Attribut der Rechenressourcen;
wobei das Bestimmen der Hardware-Topologie-Beziehung der Rechenressourcen folgende Schritte umfasst:
Bestimmen (S601) einer Minimalkomponente in den Rechenressourcen, wobei die Minimalkomponente einen Prozessor oder einen Speicher umfasst;
Bestimmen (S602) einer Maschine, die mindestens eine Minimalkomponente umfasst, wobei die Minimalkomponente in jeder Maschine nicht wiederholt ist;
Bestimmen (S603) eines Clusters, das mindestens eine Maschine umfasst, wobei die Maschine in jedem Cluster nicht wiederholt ist; und
Nehmen (S604) der Minimalkomponente, der Maschine und des Clusters als die Hardware-Topologie-Beziehung der Rechenressourcen; Bestimmen (S103) einer Verteilungsstrategie von jedem der Slicing-Ergebnisse in den Rechenressourcen auf der Grundlage der Attribute der Rechenressourcen; und
Durchführen (S104) eines verteilten Trainings an dem Modell unter Verwendung der Rechenressourcen auf der Grundlage der Verteilungsstrategie und eines regelmäßig detektierten Verfügbar-Zustands der Rechenressourcen,
wobei das Erhalten des Attributs der Rechenressourcen, die dem Modell zum Trainieren zugeordnet sind, durch das Parsen der Rechenressourcen folgende Schritte umfasst:
Erfassen (S801) des Kommunikationswegs der Rechenressourcen;
Aufbauen (S802) einer Kommunikationstopologiebeziehung zwischen den Rechenressourcen auf der Grundlage des Kommunikationswegs der Rechenressourcen; und
Nehmen (S803) der Kommunikationstopologiebeziehung als das Attribut der Rechenressourcen,
wobei das Erhalten (S202) der Slicing-Ergebnisse durch das Slicen der Operatoren und der Tensoren in dem Modell auf der Grundlage der Slicing-Strategie folgende Schritte umfasst:
Erhalten (S401) von N Slices durch das Slicen der Operatoren und der Tensoren in dem Modell auf der Grundlage der Slicing-Strategie, wobei das N eine positive ganze Zahl ist;
Laden (S402) von Informationen über verteilte Attribute des Slices für jeden der N Slices; wobei die Informationen über verteilte Attribute Prozesstopologieinformationen des Slices in dem Modell und/oder Slicing-Mapping-Informationen des Slices und/oder Slice-Größeninformationen des Slices umfassen; Bestimmen von Platzierungsinformationen jedes der N Slices auf der Grundlage der Informationen über verteilte Attribute jedes der N Slices, wobei die Platzierungsinformationen dazu konfiguriert sind, eine physische Mapping-Beziehung zwischen den N Slices und den Rechenressourcen zu repräsentieren; und
Nehmen (S403) des mit den Informationen über verteilte Attribute geladenen Slices als das Slicing-Ergebnis;
wobei das Verfahren des Weiteren folgenden Schritt umfasst:
Bestimmen eines kürzesten Kommunikationswegs zwischen einer Quellrechenressource und einer Zielrechenressource auf der Grundlage der Kommunikationstopologiebeziehung.

2. Verfahren nach Anspruch 1,
wobei eine Kategorie der Informationen über verteilte Attribute durch folgende Schritte bestimmt wird:
Empfangen (S501) einer Vielzahl von Kandidatenkategorien der Informationen über verteilte Attribute auf eine vorbestimmte Weise; und
Bestimmen (S502) einer Zielkategorie aus der Vielzahl von Kandidatenkategorien als die Kategorie der Informationen über verteilte Attribute.

3. Verfahren nach Anspruch 2,
wobei das Verfahren, wenn sich die Slices auf benachbarten Netzwerkschichten des Modells befinden und unterschiedliche Platzierungsinformationen aufweisen, folgenden Schritt umfasst:
Bestimmen eines Kommunikationshilfsoperators auf der Grundlage der Platzierungsinformationen, wobei der Kommunikationshilfsoperator dazu konfiguriert ist, eine logische Operationsbeziehung zwischen den Slices zu repräsentieren;
wobei das Verfahren, wenn sich die Slices auf einer selben Netzwerkschicht des Modells befinden, folgenden Schritt umfasst:
Bestimmen eines Rekombinationstransformationsoperators, wobei der Rekombinationstransformationsoperator dazu konfiguriert ist, eine Netzwerkschichtkonsistenzbeziehung zwischen den Slices zu repräsentieren.

4. Verfahren nach Anspruch 1, wobei das Bestimmen der Hardware-Topologie-Beziehung der Rechenressourcen des Weiteren folgende Schritte umfasst:
Bestimmen einer Affinitätsliste jeder Minimalkomponente, wobei die Affinitätsliste eine Verbindungsbeziehung zwischen einer Quellminimalkomponente und einer Zielminimalkomponente und/oder Bandweiteninformationen und/oder Latenzinformationen umfasst; und
Nehmen der Affinitätsliste als die Hardware-Topologie-Beziehung der Rechenressourcen.

5. Verfahren nach Anspruch 1, wobei das Bestimmen (S103) der Verteilungsstrategie von jedem der Slicing-Ergebnisse in den Rechenressourcen auf der Grundlage des Attributs der Rechenressourcen folgende Schritte umfasst:
Erfassen (S901) von Kandidatenverteilungsstrategien jeweiliger Slicing-Ergebnisse in den Rechenressourcen;
Bestimmen (S902) einer Effizienz von jeder der Kandidatenverteilungsstrategien; und
Bestimmen (S903) einer Zielverteilungsstrategie in den Kandidatenverteilungsstrategien auf der Grundlage der Effizienz von jeder der Kandidatenverteilungsstrategien.

6. Verfahren nach Anspruch 1 oder 5, wobei das Bestimmen (S903) der Zielverteilungsstrategie in den Kandidatenverteilungsstrategien auf der Grundlage der Effizienz von jeder der Kandidatenverteilungsstrategien folgende Schritte umfasst:
Sortieren der Kandidatenverteilungsstrategien auf der Grundlage einer vorbestimmten Regel; und
Bestimmen der Zielverteilungsstrategie in den Kandidatenverteilungsstrategien auf der Grundlage eines Sortierergebnisses.

7. Verfahren nach Anspruch 1, wobei das Durchführen (S104) eines verteilten Trainings an dem Modell unter Verwendung der Rechenressourcen auf der Grundlage der Verteilungsstrategie und eines regelmäßig detektierten Verfügbar-Zustands der Rechenressourcen folgende Schritte umfasst:
regelmäßiges (S1001) Detektieren einer Verfügbarkeit der Rechenressourcen; und
Durchführen (S1002) einer Abhilfemaßnahme als Reaktion auf ein Detektionsergebnis, das angibt, dass die Rechenressourcen in einem Nicht-verfügbar-Zustand sind, wobei der Nicht-verfügbar-Zustand einen Rechenressourcenausfall oder eine Abnahme einer Anzahl der Rechenressourcen umfasst.

8. Verfahren nach Anspruch 7, wobei das Durchführen (S1002) der Abhilfemaßnahme als Reaktion darauf, dass der Nicht-verfügbar-Zustand der Rechenressourcenausfall ist, folgende Schritte umfasst:
Erfassen (S1101) eines Trainingsmodus, der in einer von einem Client initiierten Modelltrainingsanforderung umfasst ist;
Warten (S1102) auf eine Ausfallserholung der Rechenressourcen als Reaktion darauf, dass der Trainingsmodus ein fehlertoleranter Trainingsmodus ist; und
Bestimmen (S1103), dass das Durchführen als Reaktion darauf, dass der Rechenressourcenausfall nicht optional innerhalb einer vorbestimmten Zeit ist, endet;
wobei das Durchführen (S1002) der Abhilfemaßnahme als Reaktion darauf, dass der Nicht-verfügbar-Zustand der Rechenressourcenausfall ist, des Weiteren folgende Schritte umfasst:
Bestimmen (S1201) von Kandidatenrechenressourcen als Reaktion darauf, dass der Trainingsmodus ein elastischer Trainingsmodus ist; und
erneutes Versuchen (S1202) eines Trainings in den Kandidatenrechenressourcen; wobei
das erneute Versuchen (S1202) eines Trainings in den Kandidatenrechenressourcen folgende Schritte umfasst: Erfassen eines Trainingsstatus, wenn der Rechenressourcenausfall auftritt; und erneutes Versuchen eines Trainings in den Kandidatenrechenressourcen auf der Grundlage des Trainingsstatus;
oder
wobei das erneute Versuchen (S1202) eines Trainings in den Kandidatenrechenressourcen folgende Schritte umfasst: Erfassen eines Trainingsausgangsstatus; und
erneutes Versuchen eines Trainings in den Kandidatenrechenressourcen auf der Grundlage des Trainingsausgangsstatus.

9. Verfahren nach Anspruch 7, wobei das Durchführen (S1002) der Abhilfemaßnahme als Reaktion darauf, dass der Nicht-verfügbar-Zustand die Abnahme der Anzahl der der Rechenressourcen ist, folgende Schritte umfasst:
Bestimmen (S1401) einer ersten Anzahl von verbleibenden Rechenressourcen nach der Abnahme;
Erhalten (S1402) von ersten Ergebnissen des erneuten Slicings durch das erneute Slicen des Modells auf der Grundlage der ersten Anzahl;
Bestimmen (S1403) einer ersten Verteilungsstrategie von jedem der ersten Ergebnisse des erneuten Slicings in den verbleibenden Rechenressourcen auf der Grundlage des Attributs der verbleibenden Rechenressourcen; und
Durchführen (S1404) eines verteilten Trainings an dem Modell unter Verwendung der verbleibenden Rechenressourcen auf der Grundlage der ersten Verteilungsstrategie.

10. Verfahren nach Anspruch 7, als Reaktion darauf, dass das Detektionsergebnis angibt, dass es verfügbare zusätzliche Rechenressourcen gibt, folgende Schritte umfassend:
Bestimmen (S1601) einer zweiten Anzahl der verfügbaren zusätzlichen Rechenressourcen;
Erhalten (S1602) von zweiten Ergebnissen des erneuten Slicings durch das erneute Slicen des Modells auf der Grundlage der zweiten Anzahl;
Bestimmen (S1603) einer zweiten Verteilungsstrategie von jedem der zweiten Ergebnisse des erneuten Slicings in Rechenressourcen nach der Erweiterung unter Verwendung eines Attributs der zusätzlichen Rechenressourcen; und
Durchführen (S1604) eines verteilten Trainings an dem Modell unter Verwendung der Rechenressourcen nach der Erweiterung auf der Grundlage der zweiten Verteilungsstrategie.

11. Verfahren nach Anspruch 9 oder 10, als Reaktion darauf, dass sich die Anzahl der Rechenressourcen ändert, des Weiteren folgenden Schritt umfassend:
Anpassen einer Lernrate des Modells und einer für ein einzelnes Training ausgewählten Anzahl von Mustern auf der Grundlage der geänderten Anzahl.

12. Verfahren nach einem der Ansprüche 1 bis 11, wobei das verteilte Training Folgendes umfasst: dezentrales asynchrones Pipeline-Training;
wobei das Modell auf der Grundlage einer von einem Client initiierten Modelltrainingsanforderung erhalten wird.

13. Vorrichtung für automatisches und verteiltes Training zum Trainieren eines Modells, das auf einer Ende-zu-Ende-Trainingsplattform ausgeführt wird, Folgendes umfassend:
ein Slicing-Modul (1901), das dazu konfiguriert ist, Slicing-Ergebnisse durch das Slicen eines zu trainierenden Modells zu erhalten;
ein Attributbestimmungsmodul (1902), das dazu konfiguriert ist, ein Attribut von Rechenressourcen, die dem Modell zum Trainieren zugeordnet sind, durch das Parsen von Rechenressourcen zu erhalten, wobei die Rechenressourcen auf der Grundlage einer eine Modelltrainingsanforderung initiierenden Anzahl von Clients und einer minimalen Rechenleistung und einer maximalen Rechenleistung von geforderten Rechenressourcen, die als Reaktion auf das Empfangen der von einem Client eingereichten Modelltrainingsanforderung des zu trainierenden Modells aus der Modelltrainingsanforderung geparst werden, bestimmt werden, wobei das Attribut der Rechenressourcen eine Kommunikationstopologiebeziehung und eine Hardware-Topologie-Beziehung umfasst; wobei das Attributbestimmungsmodul (1902) des Weiteren dazu konfiguriert ist, die Hardware-Topologie-Beziehung der Rechenressourcen als das Attribut der Rechenressourcen zu bestimmen durch das Bestimmen einer Minimalkomponente in den Rechenressourcen, wobei die Minimalkomponente einen Prozessor oder einen Speicher umfasst; durch das Bestimmen einer Maschine, die mindestens eine Minimalkomponente umfasst, wobei die Minimalkomponente in jeder Maschine nicht wiederholt ist; durch das Bestimmen eines Clusters, das mindestens eine Maschine umfasst, wobei die Maschine in jedem Cluster nicht wiederholt ist; und durch das Nehmen der Minimalkomponente, der Maschine und des Clusters als die Hardware-Topologie-Beziehung der Rechenressourcen; wobei das Attributbestimmungsmodul (1902) des Weiteren dazu konfiguriert ist, die Hardware-Topologie-Beziehung der Rechenressourcen als das Attribut der Rechenressourcen zu bestimmen;
ein Verteilungsstrategiebestimmungsmodul (1903), das dazu konfiguriert ist, eine Verteilungsstrategie von jedem der Slicing-Ergebnisse in den Rechenressourcen auf der Grundlage der Attribute der Rechenressourcen zu bestimmen; wobei die Slicing-Strategie durch das Parsen einer von einem Client initiierten Modelltrainingsanforderung bestimmt wird; oder durch das Verwenden eines vorher trainierten Slicing-Strategie-Modells; und
ein Modul für verteiltes Training (1904), das dazu konfiguriert ist, ein verteiltes Training an dem Modell unter Verwendung der Rechenressourcen auf der Grundlage der Verteilungsstrategie und eines regelmäßig detektierten Verfügbar-Zustands der Rechenressourcen durchzuführen,
wobei das Slicing-Modul (1901) Folgendes umfasst:
ein Untermodul zur Bestimmung von Operatoren und Tensoren, das dazu konfiguriert ist Operatoren und Tensoren des Modells zu bestimmen; und
ein Slicing-Durchführungsuntermodul, das dazu konfiguriert ist, die Slicing-Ergebnisse durch das Slicen der Operatoren und der Tensoren in dem Modell auf der Grundlage einer Slicing-Strategie zu erhalten durch das Erhalten von N Slices durch das Slicen der Operatoren und der Tensoren in dem Modell auf der Grundlage der Slicing-Strategie, wobei das N eine positive ganze Zahl ist; durch das Laden von Informationen über verteilte Attribute des Slices für jeden der N Slices; wobei die Informationen über verteilte Attribute Prozesstopologieinformationen des Slices in dem Modell und/oder Slicing-Mapping-Informationen des Slices und/oder Slice-Größeninformationen des Slices umfassen; durch das Bestimmen von Platzierungsinformationen jedes der N Slices auf der Grundlage der Informationen über verteilte Attribute jedes der N Slices, wobei die Platzierungsinformationen dazu konfiguriert sind, eine physische Mapping-Beziehung zwischen den N Slices und den Rechenressourcen zu repräsentieren; und durch das Nehmen des mit den Informationen über verteilte Attribute geladenen Slices als das Slicing-Ergebnis,
wobei die Slicing-Ergebnisse verteilte Operatoren und verteilte Tensoren sind,
wobei das Attributbestimmungsmodul (1902) Folgendes umfasst:
ein Kommunikationswegerfassungsuntermodul, das dazu konfiguriert ist, einen Kommunikationsweg der Rechenressourcen zu erfassen; und
ein Kommunikationstopologiebeziehungsaufbauuntermodul, das dazu konfiguriert ist, eine Kommunikationstopologiebeziehung zwischen den Rechenressourcen unter Verwendung des Kommunikationswegs der Rechenressourcen aufzubauen; die Kommunikationstopologiebeziehung als das Attribut der Rechenressourcen zu nehmen, und einen kürzesten Kommunikationsweg zwischen einer Quellrechenressource und einer Zielrechenressource auf der Grundlage der Kommunikationstopologiebeziehung zu bestimmen.

14. Nicht-transitorisches computerlesbares Speichermedium mit darauf gespeicherten Computeranweisungen, wobei die Computeranweisungen dazu konfiguriert sind, zu bewirken, dass ein Computer das Verfahren nach einem der Ansprüche 1 bis 12 durchführt.

15. Computerprogrammprodukt, umfassend ein/e Computerprogramm/-anweisung, wobei das/die Computerprogramm/-anweisung bei Durchführung durch einen Prozessor dazu konfiguriert ist, die Schritte des Verfahrens nach einem der Ansprüche 1 bis 12 durchzuführen.

## Revendications

1. Procédé automatique et distribué pour entraîner un modèle exécuté sur une plateforme d'entraînement de bout en bout, ledit procédé comprenant les étapes suivantes :
obtenir (S101) des résultats de découpage en tranches [en anglais : *slicing*] en découpant en tranches [en anglais : *slicing*] un modèle à entraîner, comprenant les étapes suivantes : déterminer (S201) des opérateurs et des tenseurs du modèle ; et
obtenir (S202) les résultats de découpage en tranches en découpant en tranches les opérateurs et les tenseurs dans le modèle sur la base d'une stratégie de découpage en tranches, les résultats de découpage en tranches étant des opérateurs distribués et des tenseurs distribués, dans lequel la stratégie de découpage en tranches est déterminée en analysant de manière syntaxique une demande d'entraînement de modèle initiée par un client ; ou en utilisant un modèle pré-entraîné de stratégie de découpage en tranches ;
obtenir (S102) un attribut de ressources informatiques attribuées au modèle pour l'entraînement en analysant de manière syntaxique des ressources informatiques, dans lequel les ressources informatiques sont déterminées sur la base d'un nombre de clients qui initient une demande d'entraînement de modèle et une puissance de calcul minimale et une puissance de calcul maximale de ressources informatiques requises qui sont analysées de manière syntaxique à partir de la demande d'entraînement de modèle en réponse à la réception de la demande d'entraînement de modèle du modèle à entraîner soumis par un client, dans lequel l'attribut des ressources informatiques comprend une relation de topologie de communication et une relation de topologie matérielle ;
dans lequel l'étape consistant à obtenir (S102) l'attribut des ressources informatiques attribuées au modèle pour l'entraînement en analysant de manière syntaxique les ressources informatiques comprend l'étape suivante :
déterminer la relation de topologie matérielle des ressources informatiques comme attribut de la ressource informatique ;
dans lequel l'étape consistant à déterminer la relation de topologie matérielle des ressources informatiques comprend les étapes suivantes :
déterminer (S601) un composant minimal dans les ressources informatiques, dans lequel le composant minimal comprend un processeur ou une mémoire ;
déterminer (S602) une machine comprenant au moins un composant minimal, dans lequel le composant minimal dans chaque machine n'est pas répété ;
déterminer (S603) une grappe comprenant au moins une machine, dans lequel la machine dans chaque grappe n'est pas répétée ; et
prendre (S604) le composant minimale, la machine et la grappe comme relation de topologie matérielle des ressources informatiques ; déterminer (S103) une stratégie de distribution de chacun des résultats de découpage en tranches dans les ressources informatiques sur la base des attributs des ressources informatiques ; et
effectuer (S104) un entraînement distribué sur le modèle en utilisant les ressources informatiques sur la base de la stratégie de distribution et une condition disponible détectée périodiquement des ressources informatiques,
dans lequel l'étape consistant à obtenir l'attribut des ressources informatiques attribuées au modèle pour l'entraînement en analysant de manière syntaxique les ressources informatiques comprend les étapes suivantes :
acquérir (S801) un chemin de communication des ressources informatiques ;
construire (S802) une relation de topologie de communication entre les ressources informatiques sur la base du chemin de communication des ressources informatiques ; et
prendre (S803) la relation de topologie de communication comme attribut des ressources informatiques,
dans lequel l'étape consistant á obtenir (S202) les résultats de découpage en tranches en découpant en tranches les opérateurs et les tenseurs dans le modèle sur la base de la stratégie de découpage en tranches comprend les étapes suivantes :
obtenir (S401) N tranches [en anglais : *slices*] en découpant en tranches les opérateurs et les tenseurs dans le modèle sur la base de la stratégie de découpage en tranches, le N étant un nombre entier positif ;
charger (S402) des informations sur des attributs distribués de la tranche pour chacune des N tranches, dans lequel les informations sur des attributs distribués comprennent au moins une parmi des informations sur la topologie de processus de la tranche dans le modèle, des informations sur la mise en correspondance du découpage en tranches de la tranche et des informations sur la taille de tranche de la tranche ; déterminer des informations de placement de chacune des N tranches sur la base des informations sur des attributs distribués de chacune des N tranches, dans lequel les informations de placement sont configurées pour représenter une relation de mise en correspondance physique entre les N tranches et les ressources informatiques ; et
prendre (S403) la tranche avec les informations sur des attributs distribués comme résultat de découpage en tranches ;
dans lequel le procédé comprend en outre l'étape suivante :
déterminer un chemin de communication le plus court entre une ressource informatique source et une ressource informatique cible sur la base de la relation de topologie de communication.

2. Procédé selon la revendication 1,
dans lequel une catégorie des informations sur des attributs distribués est déterminée par les étapes suivantes :
recevoir (S501) une pluralité de catégories candidats des informations sur des attributs distribués d'une manière prédéterminée ; et
déterminer (S502) une catégorie cible à partir de la pluralité de catégories candidats comme catégorie des informations sur des attributs distribués.

3. Procédé selon la revendication 2,
dans lequel le procédé comprend l'étape suivante lorsque les tranches sont situées sur des couches réseau du modèle et ont des informations de placement différentes :
déterminer un opérateur auxiliaire de communication sur la base des informations de placement, dans lequel l'opérateur auxiliaire de communication est configuré pour représenter une relation d'opération logique entre les tranches ;
dans lequel le procédé comprend l'étape suivante lorsque les tranches sont situées sur une même couche réseau du modèle :
déterminer un opérateur de transformation de recombinaison, dans lequel l'opérateur de transformation de recombinaison est configuré pour représenter une relation de cohérence de la couche réseau entre les tranches.

4. Procédé selon la revendication 1, dans lequel l'étape consistant à déterminer la relation de topologie matérielle des ressources informatiques comprend en outre les étapes suivantes :
déterminer une liste d'affinité de chaque composant minimal, dans lequel la liste d'affinité comprend au moins une parmi une relation de liaison entre un composant minimal source et un composant minimal cible, des information sur la bande passante et des informations sur la latence ; et
prendre la liste d'affinité comme relation de topologie matérielle des ressources informatiques.

5. Procédé selon la revendication 1, dans lequel l'étape consistant à déterminer (S103) la stratégie de distribution de chacun des résultats de découpage en tranches dans les ressources informatiques sur la base des attributs des ressources informatiques comprend les étapes suivantes :
acquérir (S901) des stratégies de distribution candidates de résultats respectifs de découpage en tranches dans les ressources informatiques ;
déterminer (S902) une efficacité de chacune des stratégies de distribution candidates ; et
déterminer (S903) une stratégie de distribution cible dans les stratégies de distribution candidates sur la base de l'efficacité de chacune des stratégies de distribution candidates.

6. Procédé selon la revendication 1 ou 5, dans lequel l'étape consistant à déterminer (S903) la stratégie de distribution cible dans les stratégies de distribution candidates sur la base de l'efficacité de chacune des stratégies de distribution candidates comprend les étapes suivantes :
trier les stratégies de distribution candidates sur la base d'une règle prédéterminée ;
et
déterminer la stratégie de distribution cible dans les stratégies de distribution candidates sur la base d'un résultat de tri.

7. Procédé selon la revendication 1, dans lequel l'étape consistant à effectuer (S104) un entraînement distribué sur le modèle en utilisant les ressources informatiques sur la base de la stratégie de distribution et une condition disponible détectée périodiquement des ressources informatiques comprend les étapes suivantes :
détecter périodiquement (S1001) la disponibilité des ressources informatiques ; et
effectuer (S1002) une mesure corrective en réponse à un résultat de détection qui indique que les ressources informatiques sont dans une condition indisponible, la condition indisponible comprenant une défaillance de ressources informatiques ou une réduction d'un nombre des ressources informatiques .

8. Procédé selon la revendication 7, dans lequel l'étape consistant à effectuer (S1002) la mesure corrective en réponse au fait que la condition indisponible est la défaillance de ressources informatiques comprend les étapes suivantes :
acquérir (S1101) un mode d'entraînement compris dans une demande d'entraînement de modèle initiée par un client ;
attendre (S1102) une reprise après défaillance des ressources informatiques en réponse au fait que le mode d'entraînement est un mode d'entraînement tolérant aux erreurs ; et
déterminer (S1103) que l'exécution se termine en réponse au fait que la défaillance de ressources informatiques n'est pas facultative dans un temps prédéterminé ;
dans lequel l'étape consistant à effectuer (S1002) la mesure corrective en réponse au fait que la condition indisponible est la défaillance de ressources informatiques comprend en outre les étapes suivantes :
déterminer (S1201) des ressources informatiques candidates en réponse au fait que le mode d'entraînement est un mode d'entraînement élastique ; et
réessayer (S1202) l'entraînement dans les ressources informatiques candidates ;
dans lequel
l'étape consistant à réessayer (S1202) l'entraînement dans les ressources informatiques candidates comprend les étapes suivantes : acquérir un état d'entraînement lorsque la défaillance des ressources informatiques a lieu ; et
réessayer l'entraînement dans les ressources informatiques candidates sur la base de l'état d'entraînement ;
ou
l'étape consistant à réessayer (S1202) l'entraînement dans les ressources informatiques candidates comprend les étapes suivantes : acquérir un état initial d'entraînement ; et réessayer l'entraînement dans les ressources informatiques candidates sur la base de l'état initial d'entraînement.

9. Procédé selon la revendication 7, dans lequel l'étape consistant à effectuer (S1002) la mesure corrective en réponse au fait que la condition indisponible est la réduction du nombre des ressources informatiques comprend les étapes suivantes :
déterminer (S1401) un premier nombre de ressources informatiques restants après la réduction ;
obtenir (S 1402) des premiers résultats de redécoupage en tranches en redécoupant le modèle sur la base du premier nombre ;
déterminer (S1403) une première stratégie de distribution de chacun des premiers résultats de redécoupage en tranches dans les ressources informatiques restants sur la base de l'attribut des ressources informatiques restants ; et
effectuer (S1404) un entraînement distribué sur le modèle en utilisant les ressources informatiques restants sur la base de la première stratégie de distribution.

10. Procédé selon la revendication 7, comprenant, en réponse au fait que le résultat de détection indique qu'il y a des ressources informatiques disponibles supplémentaires, les étapes suivantes :
déterminer (S1601) un deuxième nombre de ressources informatiques disponibles supplémentaires ;
obtenir (S 1602) des deuxièmes résultats de redécoupage en tranches en redécoupant le modèle sur la base du deuxième nombre ;
déterminer (S1603) une deuxième stratégie de distribution de chacun des deuxièmes résultats de redécoupage en tranches après une expansion en utilisant un attribut des ressources informatiques supplémentaires ; et
effectuer (S1604) un entraînement distribué sur le modèle en utilisant les ressources informatiques après l'expansion sur la base de la deuxième stratégie de distribution.

11. Procédé selon la revendication 9 ou 10, comprenant, en réponse au fait que le nombre des ressources informatiques change, en outre l'étape suivante :
ajuster un taux d'apprentissage du modèle et un nombre d'échantillons sélectionné pour un seul entraînement sur la base du nombre changé.

12. Procédé selon l'une quelconque des revendications 1 à 11, dans lequel l'entraînement distribué comprend : un entraînement en pipeline décentralisé asynchrone ;
dans lequel le modèle est obtenu sur la base d'une demande d'entraînement de modèle initiée par un client.

13. Appareil d'entraînement automatique et distribué pour entraîner un modèle exécuté sur une plateforme d'entraînement de bout en bout, ledit appareil comprenant :
un module (1901) de découpage en tranches qui est configuré pour obtenir des résultats de découpage en tranches en découpant en tranches un modèle à entraîner ;
un module (1902) de détermination d'attributs qui est configuré pour obtenir un attribut de ressources informatiques attribuées au modèle pour l'entraînement en analysant de manière syntaxique des ressources informatiques, dans lequel les ressources informatiques sont déterminées sur la base d'un nombre de clients qui initient une demande d'entraînement de modèle et une puissance de calcul minimale et une puissance de calcul maximale de ressources informatiques requises qui sont analysées de manière syntaxique à partir de la demande d'entraînement de modèle en réponse à la réception de la demande d'entraînement de modèle du modèle à entraîner soumis par un client, dans lequel l'attribut des ressources informatiques comprend une relation de topologie de communication et une relation de topologie matérielle ; dans lequel le module (1902) de détermination d'attributs est en outre configuré pour déterminer la relation de topologie matérielle des ressources informatiques comme attribut de la ressource informatique en déterminant un composant minimal dans les ressources informatiques, dans lequel le composant minimal comprend un processeur ou une mémoire ; en déterminant une machine comprenant au moins un composant minimal, dans lequel le composant minimal dans chaque machine n'est pas répété ; en déterminant une grappe comprenant au moins une machine, dans lequel la machine dans chaque grappe n'est pas répétée ; et en prenant le composant minimale, la machine et la grappe comme relation de topologie matérielle des ressources informatiques ; dans lequel le module (1902) de détermination d'attributs est en outre configuré pour déterminer la relation de topologie matérielle des ressources informatiques comme attribut de la ressource informatique ;
un module (1903) de détermination d'une stratégie de distribution qui est configuré pour déterminer une stratégie de distribution de chacun des résultats de découpage en tranches dans les ressources informatiques sur la base des attributs des ressources informatiques, dans lequel la stratégie de découpage en tranches est déterminée en analysant de manière syntaxique une demande d'entraînement de modèle initiée par un client ; ou en utilisant un modèle pré-entraîné de stratégie de découpage en tranches ; et
un module (1904) d'entraînement distribué qui est configuré pour effectuer un entraînement distribué sur le modèle en utilisant les ressources informatiques sur la base de la stratégie de distribution et une condition disponible détectée périodiquement des ressources informatiques,
dans lequel le module (1901) de découpage en tranches comprend :
un sous-module de détermination d'opérateurs et de tenseurs qui es configuré pour déterminer des opérateurs et des tenseurs du modèle ; et
un sous-module d'exécution de découpage en tranches qui est configuré pour obtenir les résultats de découpage en tranches en découpant en tranches les opérateurs et les tenseurs dans le modèle sur la base d'une stratégie de découpage en tranches en obtenant N tranches en découpant en tranches les opérateurs et les tenseurs dans le modèle sur la base de la stratégie de découpage en tranches, le N étant un nombre entier positif ; en chargeant des informations sur des attributs distribués de la tranche pour chacune des N tranches, dans lequel les informations sur des attributs distribués comprennent au moins une parmi des informations sur la topologie de processus de la tranche dans le modèle, des informations sur la mise en correspondance du découpage en tranches de la tranche et des informations sur la taille de tranche de la tranche; en déterminant des informations de placement de chacune des N tranches sur la base des informations sur des attributs distribués de chacune des N tranches, dans lequel les informations de placement sont configurées pour représenter une relation de mise en correspondance physique entre les N tranches et les ressources informatiques ; et en prenant la tranche avec les informations sur des attributs distribués comme résultat de découpage en tranches, dans lequel les résultats de découpage en tranches sont des opérateurs distribués et des tenseurs distribués,
dans lequel le module (1902) de détermination d'attributs comprend :
un sous-module d'acquisition de chemins de communication qui est configuré pour acquérir un chemin de communication des ressources informatiques ; et
un sous-module de construction de relations de topologie de communication qui est configuré pour construire une relation de topologie de communication entre les ressources informatiques en utilisant le chemin de communication des ressources informatiques ; pour prendre la relation de topologie de communication comme attribut des ressources informatiques et pour déterminer un chemin de communication le plus court entre une ressource informatique source et une ressource informatique cible sur la base de la relation de topologie de communication.

14. Support de stockage lisible par ordinateur et non transitoire ayant stocké sur celui-ci des instructions d'ordinateur, dans lequel les instructions d'ordinateur sont configurées pour amener un ordinateur à effectuer le procédé selon l'une quelconque des revendications 1 à 12.

15. Produit de programme d'ordinateur, comprenant un programme/une instruction d'ordinateur, dans lequel le programme/l'instruction d'ordinateur est configuré(e) pour mettre en œuvre les étapes du procédé selon l'une quelconque des revendications 1 à 12 lors d'une exécution par un processeur.
